# EUROPÄISCHE PATENTSCHRIFT

(11) **EP 2 681 464 B1**
(45) Veröffentlichungstag und Bekanntmachung des Hinweises auf die Patenterteilung: **11.01.2017**
(21) Anmeldenummer: 12703047.6
(22) Anmeldetag: 01.02.2012
(51) Int. Cl.: F16H 3/00, F16H 3/097, F16H 37/04, B60K 6/48, B60K 6/547

(54) **DOPPELKUPPLUNGSGETRIEBE**
DUAL CLUTCH GEARBOX
TRANSMISSION À DOUBLE EMBRAYAGE

(30) Priorität: 03.03.2011 DE 102011005028
(43) Veröffentlichungstag der Anmeldung: 08.01.2014
(73) Patentinhaber: ZF Friedrichshafen AG, 88046 Friedrichshafen (DE)
(72) Erfinder: KALTENBACH, Johannes, 88048 Friedrichshafen (DE)
(86) Internationale Anmeldenummer: PCT/EP2012/051613
(87) Internationale Veröffentlichungsnummer: WO 2012/116867

(56) Entgegenhaltungen:
- EP-A2- 2 149 725
- WO-A1-2005/065976
- DE-A1- 10 133 695
- DE-A1-102005 044 068
- DE-A1-102007 047 671

## Beschreibung

Die vorliegende Erfindung betrifft ein Doppelkupplungsgetriebe gemäß der im Oberbegriff des Patentanspruches 1 näher definierten Art.

Beispielsweise aus der Druckschrift DE 10 2005 044 068 A1 ist ein lastschaltbares Gruppengetriebe mit einer Doppelkupplung bekannt, bei dem die Antriebswelle und die Abtriebswelle koaxial zueinander angeordnet sind. Die den beiden Teilgetrieben zugeordneten Getriebeeingangswellen stehen über Eingangskonstanten jeweils mit einer der Vorgelegewellen in Eingriff, wobei die Vorgelegewellen koaxial zueinander angeordnet sind. Ferner umfasst das bekannte Getriebe eine Hauptwelle, die zum Schalten eines Direktganges mit einer der Getriebeeingangswellen koppelbar ist. Das abtriebsseitige Ende der Hauptwelle ist mit einem Sonnenrad verbunden, welches das Eingangsglied einer als Planetengetriebe ausgebildeten Bereichsgruppe bildet. Der Planetenradträger ist drehfest mit einer Getriebeausgangswelle bzw. Abtriebswelle verbunden. Somit werden sämtliche Gangstufen über die Bereichsgruppe auf die Abtriebswelle übertragen. Deshalb kann zumindest die Gangstufe, bei der eine Bereichsschaltung erfolgt, nicht lastschaltbar ausgeführt werden.

Ferner ist aus der Druckschrift DE 198 50 549 A1 ein Doppelkupplungsgetriebe für ein Kraftfahrzeug bekannt, bei dem eine Eingangswelle des Getriebes mit einer Elektromaschine gekoppelt ist, so dass auf einen Starter und einen Generator für den Verbrennungsmotor verzichtet werden kann.

Aus der Druckschrift DE 10 2007 047 671 A1, die die Merkmale des jeweiligen Oberbegriffs der unabhängigen Ansprüche 1 und 9 offenbart, ist eine Doppelkupplungsgetriebevorrichtung mit einer Hauptgruppe und einer Nachschaltgruppe bekannt, die eine Kopplungsvorrichtung umfasst, die dazu vorgesehen ist, ein Hauptgruppengetriebeelement der Hauptgruppe mit einem Nachschaltgruppengetriebeelement der Nachschaltgruppe zu koppeln.

Der vorliegenden Erfindung liegt die Aufgabe zu Grunde, ein Doppelkupplungsgetriebe der eingangs beschriebenen Gattung mit möglichst vielen lastschaltbaren Gangstufen und möglichst wenigen Radebenen und Schaltelementen vorzuschlagen.

Diese Aufgabe wird erfindungsgemäß durch die Merkmale des Patentanspruches 1 oder des Patentanspruches 9 gelöst, wobei sich weitere vorteilhafte Ausgestaltungen aus den Unteransprüchen und den Zeichnungen sowie der dazugehörigen Beschreibung ergeben.

Somit wird ein Doppelkupplungsgetriebe mit zwei Kupplungen vorgeschlagen, die einerseits mit der Antriebswelle und andererseits mit zugeordneten Getriebeeingangswellen der beiden Teilgetriebe verbunden sind. Den beiden Teilgetrieben sind jeweils eine Vorgelegewelle zugeordnet, so dass mehrere schaltbare Übersetzungsstufen bzw. Radebenen gebildet werden, die über die jeweilige Vorgelegewelle und über eine mit einem als Bereichsgruppe ausgebildeten Planetengetriebe verbundene Hauptwelle mit einer zugeordneten Abtriebswelle gekoppelt werden können, um die gewählte Übersetzung auf den Abtrieb zu übertragen. Die Abtriebswelle des Doppelkupplungsgetriebes ist dabei koaxial zur Antriebswelle angeordnet. Erfindungsgemäß ist nun vorgesehen, dass zumindest eine schaltbare Übersetzungsstufe nicht über die Bereichsgruppe realisiert wird. Dies bedeutet, dass zumindest eine Übersetzung bzw. eine Gangstufe zumindest einer der Teilgetriebe unabhängig von der als Planetenradsatz ausgebildeten Bereichsgruppe auf die Abtriebswelle übertragen wird.

Auf diese Weise wird ein von der Bereichsschaltung unabhängiger Leistungspfad zum Abtrieb bereitgestellt, so dass sämtliche Vorwärtsgänge sequenziellen lastschaltbar ausgeführt werden können. Infolgedessen können bei dem vorgeschlagenen Doppelkupplungsgetriebe die Vorteile einer Bereichsgruppe und die Vorteile von unabhängigen Leistungspfaden miteinander kombiniert werden, so dass ein Radsatz realisiert wird, welcher wenige Bauteile aufgrund der Doppelnutzung von Übersetzungsstufen bzw. Radebenen aufweist und eine maximale Anzahl von lastschaltbaren Gängen konstruktiv einfach realisiert.

Ferner ergibt sich der Vorteil, dass durch eine koaxial zur Antriebswelle und Abtriebswelle angeordnete Hauptwelle des Doppelkupplungsgetriebes zumindest ein Wirkungsgrad günstiger Direktgang realisiert werden kann. Beispielsweise als sechster oder auch als achter Vorwärtsgang. Es sind aber auch andere Auslegungsvarianten für den Direktgang möglich.

Im Rahmen einer möglichen Ausführungsvariante der Erfindung kann vorgesehen werden, dass bei dem erfindungsgemäßen Doppelkupplungsgetriebe die verwendeten Schaltelemente zum Schalten der Übersetzungsstufen den Vorgelegewellen der Teilgetriebe und der Hauptwelle des Getriebes zugeordnet sind, wobei die Getriebeeingangswellen der Teilgetriebe jeweils über eine Antriebskonstante als Stirnradstufe mit der zugeordneten Vorgelegewelle verbunden sind. Als Schaltelemente können doppelt wirkende Schaltelemente bzw. Doppel-Schaltelemente eingesetzt werden, die je nach Schaltrichtung das eine oder andere zugeordnete Losrad der Radebene mit der zugeordneten Welle verbinden. Es ist möglich, dass ein doppelseitig wirkendes Schaltelement durch zwei einseitig wirkende Schaltelemente oder umgekehrt ersetzt wird. Als Schaltelemente können z. B. hydraulisch, elektrisch, pneumatisch, mechanisch betätigte Kupplungen oder auch formschlüssige Klauenkupplungen sowie jede Art von Synchronisierungen eingesetzt werden, welche zur drehfesten Verbindung von einem Losrad mit einer Welle dienen.

Die vorgesehene Bereichsgruppe bzw. das Planetengetriebe kann beispielsweise durch ein oder mehrere Schaltelemente geschaltet werden, indem beispielsweise ein Hohlrad des Planetengetriebes über das Schaltelement mit dem Gehäuse oder mit dem Planetenträger verbunden werden kann. Somit können die den Radebenen zugeordneten Übersetzungsstufen über die Zwischenwellen bzw. Vorgelegewellen und über die mit dem Planetenträger verbundene Hauptwelle mit der Abtriebswelle gekoppelt werden, so dass je nach Schaltrichtung des zugeordneten Schaltelements die Anzahl der Gänge durch das Planetengetriebe verdoppelt werden kann, wodurch für jedes Teilgetriebe vier Gänge vorgesehen sind. Die Bereichsgruppen-Übersetzung kann mit großem Sprung gewählt werden, so dass die Gangfolge entsprechend erweitert wird.

Zu dem kann der unabhängig von der Bereichsgruppe gewählte Leistungspfad über eine Radebene des zweiten Teilgetriebes bzw. der zweiten Vorgelegewelle unabhängig von der Hauptwelle direkt mit der Abtriebswelle gekoppelt werden, indem die entsprechende Radebene an den Planetenträger direkt angebunden ist. Diese Übersetzungsstufe kann beispielsweise auf den fünften Gang gelegt werden, so dass vor dem Wechsel in den sechsten Gang die Bereichsgruppe geschaltet werden kann. Auf diese Weise sind zumindest die ersten acht Vorwärtsgänge sequenziell lastschaltbar ausführbar.

Bei dem erfindungsgemäßen Doppelkupplungsgetriebe können somit vorzugsweise neun Vorwärtsgänge und zwei Rückwärtsgänge mit nur sieben den beiden Teilgetrieben zugeordneten Übersetzungsstufen bzw. Radebenen realisiert werden. Vorzugsweise können die schaltbaren Übersetzungsstufen als Stirnrad-Übersetzungsstufen ausgeführt sein. Sechs der den Teilgetrieben zugeordneten Radebenen werden über die Hauptwelle und das Planetengetriebe mit der Abtriebswelle gekoppelt, wobei die siebente Übersetzungsstufe bzw. Radebene unabhängig von der Bereichsgruppe bzw. der Hauptwelle mit der Abtriebswelle direkt gekoppelt wird.

Unabhängig von den jeweiligen Ausführungsvarianten des Doppelkupplungsgetriebes kann vorgesehen sein, dass zum Realisieren eines Hybridkonzeptes zumindest eine elektrische Maschine vorgesehen ist. Die elektrische Maschine kann beispielsweise an den Teilgetrieben und/oder auch im Bereich der Hauptwelle mit dem Radsatz gekoppelt werden. Zum Verbinden der elektrischen Maschine mit einem der Teilgetriebe kann diese direkt oder auch über eine schaltbare Verbindung mit der zugeordneten Getriebeeingangswelle gekoppelt werden.

Wenn bei dem Hybridkonzept die elektrische Maschine der Hauptwelle zugeordnet ist, kann diese zum Beispiel seitlich über eine Stirnradstufe vorzugsweise an einem Festrad der Hauptwelle angebunden sein. Bei dieser Anordnungsmöglichkeit ergeben sich unter anderem Bauraumvorteile.

Um die Abmessungen des erfindungsgemäßen Doppelkupplungsgetriebes möglichst zu minimieren, besteht das Bestreben, möglichst viele Doppelradebenen als Übersetzungsstufen vorzusehen, bei denen die Zahnräder der Vorgelegewelle sowohl mit Zahnrädern der Getriebeeingangswellen der Teilgetriebe als auch mit Zahnrädern der Hauptwelle in Eingriff stehen.

Aufgrund von Mehrfachnutzungen von Losrädern der Übersetzungsstufen können bei dem vorgeschlagenen Doppelkupplungsgetriebe mit möglichst wenigen Radebenen eine maximale Anzahl von Übersetzungen realisiert werden, wobei vorzugsweise die ersten acht Vorwärtsgänge bei sequentieller Ausführung lastschaltbar sind.

Zur Optimierung der Abstufung bei dem erfindungsgemäß vorgeschlagenen Doppelkupplungsgetriebe kann auch zum Beispiel eine Doppel-Radebene durch zwei Einzel-Radebenen ersetzt werden, indem ein Festrad durch zwei Festräder ersetzt wird. Dadurch kann eine besonders harmonische, progressive Gangabstufung erreicht werden. Es ist auch möglich, zwei Einfach-Radebenen durch eine Doppel-Radebene zu ersetzen.

In vorteilhafter Weise können die unteren Vorwärtsgänge und die Rückwärtsgänge über eine Anfahr- bzw. Schaltkupplung betätigt werden, um somit höhere Belastungen auf diese Kupplung zu konzentrieren und damit die zweite Kupplung bauraum- und kostengünstiger ausführen zu können. Insbesondere können die Radebenen bei dem vorgeschlagenen Doppelkupplungsgetriebe so angeordnet werden, dass sowohl über die innere Getriebeeingangswelle oder auch über die äußere Getriebeeingangswelle und somit über die jeweils besser geeignete Kupplung angefahren werden kann, welches auch bei einer konzentrisch angeordneten, radial ineinander geschachtelten Bauweise der Doppelkupplung ermöglicht wird. Dazu können die Radebenen entsprechend spiegelsymmetrisch angeordnet bzw. getauscht werden.

Im Weiteren wird die vorliegende Erfindung anhand der Zeichnungen weiter erläutert. Es zeigen:
- Figur 1: eine schematische Ansicht einer ersten Ausführungsvariante eines erfindungsgemäßen Doppelkupplungsgetriebes;
- Figur 1A: ein mögliches Schaltschema der ersten Ausführungsvariante des Doppelkupplungsgetriebes;
- Figur 1B: ein mögliches Schaltschema bezüglich der Lastschaltbarkeit der ersten Ausführungsvariante des Doppelkupplungsgetriebes;
- Figur 2: eine schematische Ansicht einer zweiten möglichen Ausführungsvariante des Doppelkupplungsgetriebes;
- Figur 2A: ein mögliches Schaltschema der zweiten Ausführungsvariante des Doppelkupplungsgetriebes;
- Figur 2B: ein mögliches Schaltschema bezüglich der Lastschaltbarkeit der zweiten Ausführungsvariante des Doppelkupplungsgetriebes;
- Figur 3: eine weitere schematische Ansicht einer nicht beanspruchten zweiten möglichen Ausführungsvariante des Doppelkupplungsgetriebes;
- Figur 4: eine schematische Ansicht eines möglichen Hybridkonzeptes beispielhaft anhand der ersten Ausführungsvariante des Doppelkupplungsgetriebes; und
- Figur 5: eine schematische Ansicht einer weiteren Ausführung des Hybridkonzeptes beispielhaft anhand der ersten Ausführungsvariante des Doppelkupplungsgetriebes.

In den Figuren sind zwei mögliche Ausführungsvarianten eines erfindungsgemäßen Doppelkupplungsgetriebes beispielhaft dargestellt. Das zum Beispiel Neungang bzw. Achtgang-Doppelkupplungsgetriebe besitzt vorzugsweise zwei Rückwärtsgänge R1 und R2, wobei neben weiteren Lastschaltgängen zumindest die ersten acht Vorwärtsgänge sequenzielle lastschaltbar ausgeführt werden können und zudem zumindest einer der Vorwärtsgänge als Direktgang realisierbar ist. Die Anzahl der vorgenannten Gänge sind jedoch nur beispielhaft, so dass ohne weiteres auch andere Gangabstufungen vorgesehen werden können.

Das Doppelkupplungsgetriebe umfasst unabhängig von den jeweiligen Ausführungsvarianten zwei Kupplungen K 1, K 2, deren Eingangsseiten mit einer Antriebswelle w 0 und deren Ausgangsseiten mit jeweils einer von zwei koaxial zueinander angeordneten Getriebeeingangswellen w 1, w 2 der beiden Teilgetriebe verbunden sind. Die erste Getriebeeingangswelle w 1 ist beispielhaft als Vollwelle und die zweite Getriebeeingangswelle w 2 ist beispielhaft als Hohlwelle ausgebildet. Der ersten Getriebeeingangswelle w 1 ist über eine Antriebskonstante eine erste Vorgelegewelle w 6 z. B. als Hohlwelle und der zweiten Getriebeeingangswelle w 2 ist ebenfalls über eine Antriebskonstante eine zweite Vorgelegewelle w 3 z. B. als Vollwelle zugeordnet. Die Antriebswelle w 0 ist koaxial zu einer Abtriebswelle w 5 angeordnet. Den Teilgetrieben sind zum Beispiel sieben Stirnrad-Übersetzungsstufen als Radebenen zugeordnet. Sechs der zugeordneten Radebenen werden über die Vorgelegewellen w 3, w 6 und über die Hauptwelle w 4 sowie über das als Bereichsgruppe ausgebildete Planetengetriebe mit der Abtriebswelle w 5 gekoppelt. Die siebente, dem zweiten Teilgetriebe zugeordnete Übersetzungsstufe wird unabhängig von der Bereichsgruppe bzw. der Hauptwelle w 4 direkt mit der Abtriebswelle w 5 gekoppelt, indem die Übersetzungsstufe mit dem Planetenträger PT des Planetengetriebes direkt verbunden ist, der wiederum mit der Abtriebswelle w 5 drehfest gekoppelt ist.

Zum Schalten der Übersetzungsstufen sind vier doppelt wirkende Schaltelemente S 1, S 2, S 3, S 4 vorgesehen, die in den Figuren jeweils in ihrer Neutralstellung N dargestellt sind, wobei diese nur bei dem vierten Schaltelement S 4 gekennzeichnet ist.

Den Übersetzungsstufen, die über die Bereichsgruppe realisiert werden, sind jeweils zwei Gangstufen bzw. Gänge zugeordnet. Dies ist in den Figuren dadurch gekennzeichnet, dass die den Übersetzungsstufen zugeordneten Gangstufen übereinander angegeben sind, wobei der jeweils obere Gang die Übersetzung der Bereichsgruppe ins Langsame bzw. low (L) und der jeweils untere Gang die Übersetzung der Bereichsgruppe ins Schnelle bzw. high (H) entspricht.

Unabhängig von der jeweiligen Ausführungsvariante wird der unabhängige Leistungspfad für den fünften Gang genutzt. Dadurch, dass der fünfte Gang bezüglich der Übersetzung bzw. Zähnezahlen der beteiligten Zahnräder unabhängig einstellbar ist, kann der erste Gang ebenfalls unabhängig gewählt werden. Dies hat den Vorteil, dass trotz der an sich bei Gruppengetrieben notwendigen geometrische Stufung bei der Schaltung von dem ersten in den zweiten Gang eine progressive Stufung möglich ist. Da die Übersetzungsstufe für die Rückwärtsgänge über die Bereichsgruppe geschaltet werden, ergeben sich in vorteilhafter Weise zwei Rückwärtsgänge R1 und R2.

Unabhängig von den Ausführungsvarianten sind den beiden Getriebeeingangswellen w 1, w 2 der Teilgetriebe jeweils ein Festrad z 11, z 21 als Antriebskonstante zugeordnet, die jeweils mit einem zugeordneten Festrad z 12, z 22 der jeweiligen Vorgelegewellen w 3, w 6 in Eingriff stehen, so dass insgesamt sieben Radebenen als Stirnradstufen vorgesehen sind.

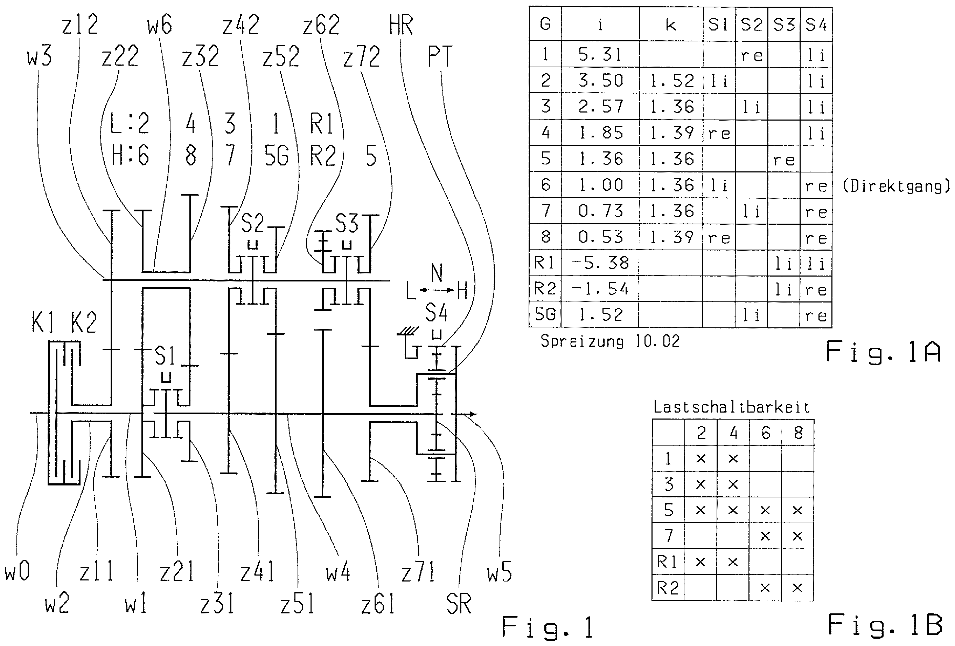

Gemäß Figuren 1, 4 und 5 werden bei der ersten Ausführungsvariante des Doppelkupplungsgetriebes der mit der ersten Getriebeeingangswelle w 1 verbundenen Vorgelegewelle w 6 zwei Festräder z 22, z 32 zugeordnet. Der der zweiten Getriebeeingangswelle w 2 verbundenen zweiten Vorgelegewelle w 3 sind ein Festrad z 12 und vier Losräder z 42, z 52, z 62, z 72 zugeordnet, wobei die beiden Losräder z 42, z 52 durch das zugeordnete zweite Schaltelement S 2 je nach Schaltrichtung drehfest mit der zweiten Vorgelegewelle w 3 verbunden werden können. Die beiden Losräder z 62, z 72 werden durch das zugeordnete dritte Schaltelement S 3 je nach Schaltrichtung drehfest mit der zweiten Vorgelegewelle w 3 verbunden. Ferner sind bei dieser Ausführungsvariante der Hauptwelle w 4 drei Festräder z 41, z 51, z 61 und zwei Losräder z 31, z 71 zugeordnet, wobei das Losrad z 31 über das erste zugeordnete Schaltelement S 1 mit der Hauptwelle w 4 verbindbar ist und wobei das Losrad z 71 nicht schaltbar ausgeführt ist. Das der Hauptwelle w 4 zugeordnete Losrad z 71 ist direkt mit dem Planetenträger PT des Planetengetriebes verbunden, um den unabhängige Leistungspfad direkt mit der Abtriebswelle w 5 zu verbinden, da sich bei dieser Übersetzung das vierte Schaltelement S 4 in seiner Neutralstellung N befindet. Das antriebsseitige Ende der Hauptwelle w 4 ist über das erste doppelt wirkende Schaltelement S 1 mit der ersten Getriebeeingangswelle w 1 verbindbar, wobei das abtriebsseitige Ende der Hauptwelle w 4 mit dem Sonnenrad SR des als Bereichsgruppe ausgebildeten Planetengetriebes verbunden ist. Je nach Schaltrichtung des dem Hohlrad HR des Planetengetriebes zugeordneten vierten Schaltelements S 4 kann eine Übersetzung ins Schnelle H oder ins Langsame L auf die Abtriebswelle w 5 übertragen werden.

In der ersten Einfach-Radebene als Antriebskonstante steht das Festrad z 11 der zweiten Getriebeeingangswelle w 2 mit dem Festrad z 12 der zweiten Vorgelegewelle w 3 in Eingriff. In der zweiten Einfach-Radebene als Antriebskonstante steht das Festrad z 21 der ersten Getriebeeingangswelle w 1 mit dem Festrad z 22 der ersten Vorgelegewelle w 6 in Eingriff. In der dritten Einfach-Radebene steht das Losrad z 31 der Hauptwelle w 4 mit dem Festrad z 32 der ersten Vorgelegewelle w 6 in Eingriff. In der vierten Einfach-Radebene steht das Festrad z 41 der Hauptwelle w 4 mit dem Losrad z 42 der zweiten Vorgelegewelle w 3 in Eingriff. In der fünften Einfach-Radebene steht das Festrad 51 der Hauptwelle w 4 mit dem Losrad z 52 der zweiten Vorgelegewelle w 3 in Eingriff. In der sechsten Doppel-Radebene steht das Festrad z 61 der Hauptwelle w 4 mit einem Zwischenrad zr zur Drehzahlumkehr für die Rückwärtsgangübersetzungen in Eingriff, wobei das Zwischenrad zr zudem mit dem Losrad z 62 der zweiten Vorgelegewelle w 3 kämmt. In der siebenten Einfach-Radebene steht das Losrad z 71 der Hauptwelle w 4 mit dem Losrad z 72 der zweiten Vorgelegewelle w 3 in Eingriff, wobei das Losrad z 71 über den Planetenträger PT mit der Abtriebswelle w 5 verbunden ist. Das Losrad z 71 kann auch als kurze Hohlwelle auf der Hauptwelle w 4 ausgeführt werden.

Somit ergeben sich beispielhaft bei der ersten Ausführungsvariante zumindest sechs Einfach-Radebenen und eine Doppel-Radebene mit insgesamt zumindest 15 Zahnrädern sowie ein Planetenradsatz als Bereichsgruppe, wobei die Übersetzungsstufen ausgewogen sind und bei den Zahnrädern geringe Zahnkräfte auftreten. Zudem ergeben sich kleine Synchronisierungen bei den ersten drei Schaltelementen S 1, S 2, S 3, sodass nur eine größer dimensionierte Synchronisierung bei dem vierten Schaltelements S 4 erforderlich ist.

Das dazugehörige Schaltschema ist in Figur 1A mit beispielhaft angegebenen Übersetzungen i und Stufensprüngen k sowie der Spreizung dargestellt, wobei die jeweilige Betätigungsrichtung der Schaltelemente S 1, S 2, S 3, S 4 mit li für Links und mit re für rechts jeweils bezogen auf die Bewegungsrichtung der schematisch dargestellten Schaltelemente in der Zeichnungsebene der Figuren angegeben sind.

Aus dem Schaltschema ergibt sich beispielhaft, dass der erste Vorwärtsgang 1 über die zweite Kupplung K 2 und über das das Losrad z 52 mit der zweiten Vorgelegewelle w 3 verbindende zweite Schaltelement S 2 sowie über das das Hohlrad HR des Planetengetriebes mit dem Gehäuse verbindende vierte Schaltelement S 4 geschaltet wird, wobei ein zweiter Vorwärtsgang 2 über die erste Kupplung K 1 und über das die erste Getriebeeingangswelle w 1 mit der Hauptwelle w 4 verbindende erste Schaltelement S 1 sowie über das das Hohlrad HR des Planetengetriebes mit dem Gehäuse verbindende vierte Schaltelement S 4 geschaltet wird. Der dritte Vorwärtsgang 3 wird über die zweite Kupplung K 2 und über das das Losrad z 42 mit der zweiten Vorgelegewelle w 3 verbindende zweite Schaltelement S 2 sowie über das das Hohlrad HR des Planetengetriebes mit dem Gehäuse verbindende vierte Schaltelement S 4 geschaltet, wobei der vierte Vorwärtsgang 4 über die erste Kupplung K 1 und über das das Losrad z 31 mit der Hauptwelle w 4 verbindende erste Schaltelement S 1 sowie über das das Hohlrad HR des Planetengetriebes mit dem Gehäuse verbindende vierte Schaltelement S 4 geschaltet wird. Der fünfte Vorwärtsgang 5 wird über die zweite Kupplung K 2 und über das das Losrad z 72 mit der zweiten Vorgelegewelle w 3 verbindende dritte Schaltelement S 3 sowie über das dem Hohlrad HR des Planetengetriebes zugeordnete und in einer Neutralstellung N vorgesehene vierte Schaltelement S 4 geschaltet, wobei der sechste Vorwärtsgang 6 über die erste Kupplung K 1 und über das die erste Getriebeeingangswelle w 1 mit der Hauptwelle w 4 verbindende erste Schaltelement S 1 sowie über das das Hohlrad HR mit dem Planetenträger PT des Planetengetriebes verbindende vierte Schaltelement S 4 als Direktgang geschaltet wird. Der siebente Vorwärtsgang 7 wird über die zweite Kupplung K 2 und über das das Losrad z 42 mit der zweiten Vorgelegewelle w 3 verbindende zweite Schaltelement S 2 sowie über das das Hohlrad HR mit dem Planetenträger PT des Planetengetriebes verbindende vierte Schaltelement S 4 geschaltet, wobei der achte Vorwärtsgang 8 über die erste Kupplung K 1 und über das das Losrad z 31 mit der Hauptwelle w 4 verbindende erste Schaltelement S 1 sowie über das das Hohlrad HR mit dem Planetenträger PT des Planetengetriebes verbindende vierte Schaltelement S 4 geschaltet wird.

Zudem werden der Rückwärtsgang R 1 über die zweite Kupplung K 2 und über das das Losrad z 62 mit der zweiten Vorgelegewelle w 3 verbindende dritte Schaltelement S 3 sowie über das das Hohlrad HR des Planetengetriebes mit dem Gehäuse verbindende vierte Schaltelement S 4 geschaltet, wobei der weitere Rückwärtsgang R 2 über die zweite Kupplung K 2 und über das das Losrad z 62 mit der zweiten Vorgelegewelle w 3 verbindende dritte Schaltelement S 3 sowie über das das Hohlrad HR mit dem Planetenträger PT des Planetengetriebes verbindende vierte Schaltelement S 4 geschaltet wird.

Darüber hinaus wird der weitere Vorwärtsgang 5G als Bereichsgruppengang über die zweite Kupplung K 2 und über das das Losrad z 52 mit der zweiten Vorgelegewelle w 3 verbindende zweite Schaltelement S 2 sowie über das das Hohlrad HR mit dem Planetenträger PT des Planetengetriebes verbindende vierte Schaltelement S 4 geschaltet.

Bei der ersten Ausführungsvariante gemäß Figur 1, 3 und 4 sind somit der zweiten Radebene die Gänge 2 und 6, der dritten Radebene die Gänge 4 und 8, der vierten Radebene die Gänge 3 und 7, der fünften Radebene die Gänge 1 und 5G, der sechsten Radebene die Rückwärtsgänge R1 und R2 sowie der siebenten Radebene der fünfte Gang 5 zugeordnet. Das Planetengetriebe als Bereichsgruppe ist sowohl dem abtriebsseitigen Ende der Hauptwelle w 4 als auch der Abtriebswelle w 5 zugeordnet, in dem das Sonnenrad SR mit der Hauptwelle w 4 und der Planetenträger PT mit der Abtriebswelle w 5 verbunden ist. Zum Schalten der Übersetzungsbereiche ist dem Hohlrad HR das vierte Schaltelement S 4 derart zugeordnet, dass das Hohlrad HR in einer ersten Schaltstellung, die in der Zeichnungsebene nach links gerichtet ist, mit dem Gehäuse verbunden ist und in einer zweiten Schaltstellung, die in der Zeichnungsebene nach rechts gerichtet ist, mit dem Planetenträger PT verbunden ist. Neben der Neutralstellung N kann das vierte Schaltelement S4 somit nach rechts geschaltet den Übersetzungsbereich ins Schnelle H und nach links geschaltet ins Langsame L realisieren. Bei der beispielhaften Auslegung des Radsatzes bedeutet der Übersetzungsbereich ins Schnelle H, dass das Sonnenrad SR mit gleicher Drehzahl wie der Planetenträger PT rotiert, wobei der Übersetzungsbereich ins Langsame L eine Untersetzung bedeutet.

Gemäß Figur 1B wird beispielhaft ein Schaltschema der ersten Ausführungsvariante bezüglich der Lastschaltbarkeit der Gänge des Doppelkupplungsgetriebes angegeben. Aus diesem Schaltschema ergeben sich mit X gekennzeichnete Gangschaltungen bzw. Gangwechsel, welche lastschaltbar ausführbar sind.

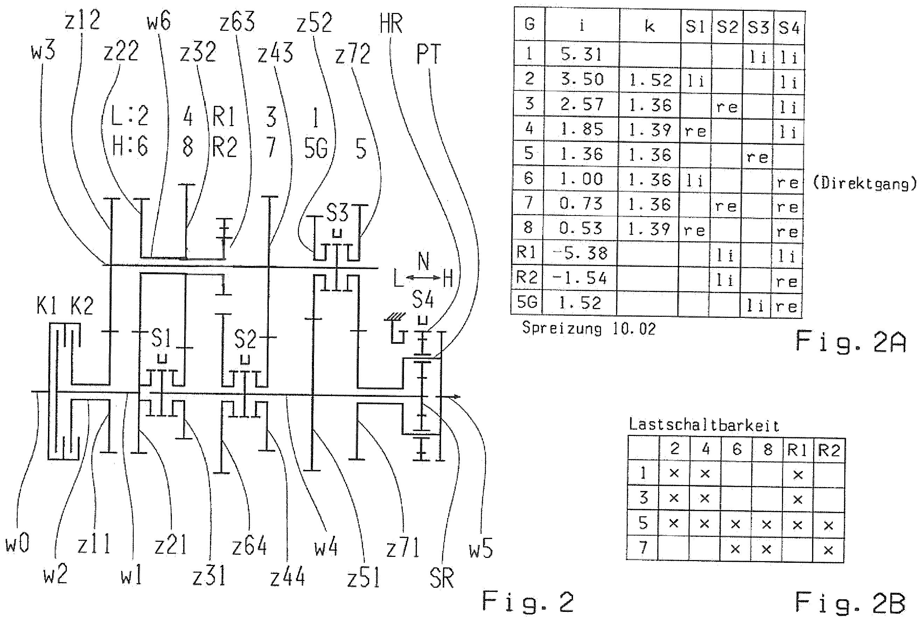

Gemäß Figur 2 werden bei der zweiten Ausführungsvariante des Doppelkupplungsgetriebes der mit der ersten Getriebeeingangswelle w 1 verbundenen ersten Vorgelegewelle w 6 drei Festräder z 22, z 32, z 63 zugeordnet. Der mit der zweiten Getriebeeingangswelle w 2 verbundenen zweiten Vorgelegewelle w 3 sind zwei Festräder z 12, z 43 und zwei Losräder z 52, z 72 zugeordnet, wobei die Losräder z 52, z 72 je nach Schaltrichtung über das dritte zugeordnete Schaltelement S 3 mit der zweiten Vorgelegewelle w 3 verbindbar sind. Ferner sind bei der zweiten Ausführungsvariante der Hauptwelle w 4 ein Festrad z 51 und vier Losräder z 31, z 64, z 44, z 71 zugeordnet, wobei das Losrad z 31 über das zugeordnete erste Schaltelement S 1 mit der Hauptwelle w 4 verbindbar ist, wobei die beiden Losräder z 64, z 44 je nach Schaltrichtung über das zugeordnete zweite Schaltelement S 2 mit der Hauptwelle w 4 verbindbar sind und wobei das Losrad z 71 nicht schaltbar ausgeführt ist. Das Losrad z 71 ist direkt mit dem Planetenträger PT des Planetengetriebes verbunden, um den unabhängige Leistungspfad direkt mit der Abtriebswelle w 5 zu verbinden, da sich bei dieser Übersetzung das vierte Schaltelement S 4 in seiner Neutralstellung N befindet. Das antriebsseitige Ende der Hauptwelle w 4 ist über das erste doppeltwirkende Schaltelement S 1 mit der ersten Getriebeeingangswelle w 1 verbindbar, wobei das abtriebsseitige Ende der Hauptwelle w 4 mit dem Sonnenrad SR des als Bereichsgruppe ausgebildeten Planetengetriebes verbunden ist. Je nach Schaltrichtung des dem Hohlrad HR des Planetengetriebes zugeordneten vierten Schaltelements S 4 kann eine Übersetzung ins Schnelle H oder ins Langsame L auf die Abtriebswelle w 5 übertragen werden.

Bei dem in Figur 2 dargestellten Radsatz stehen in der ersten Einfach-Radebene als Antriebskonstante das Losrad z 11 der zweiten Getriebeeingangswelle w 2 mit dem Festrad z 12 der zweiten Vorgelegewelle w 3 in Eingriff, wobei in der zweiten Einfach-Radebene als Antriebskonstante das Losrad z 21 der zweiten Getriebeeingangswelle w 2 mit dem Festrad z 22 der ersten Vorgelegewelle w 6 kämmt. In der dritten Einfach-Radebene steht das Losrad z 31 der Hauptwelle w 4 mit dem Festrad z 32 der ersten Vorgelegewelle w 6 in Eingriff. In der vierten Doppel-Radebene steht das Losrad z 64 der Hauptwelle w 4 mit einem Zwischenrad zr zur Drehzahlumkehr für die Rückwärtsgangübersetzungen in Eingriff, wobei das Zwischenrad zr auch mit dem Festrad z 63 der ersten Vorgelegewelle w 6 kämmt. In der fünften Einfach-Radebene steht das Losrad z 44 der Hauptwelle w 4 mit dem Festrad z 43 der weiten Vorgelegewelle w 3 in Eingriff. In der sechsten Einfach-Radebene steht das Festrad z 51 der Hauptwelle w 4 mit dem Losrad z 52 der zweiten Vorgelegewelle w 3 in Eingriff. In der siebenten Einfach-Radebene steht das Losrad z 71 der Hauptwelle w 4 mit dem Losrad z 72 der zweiten Vorgelegewelle w 3 in Eingriff, wobei das Losrad z 71 über den Planetenträger PT mit der Abtriebswelle w 5 verbunden ist. Das Losrad z 71 kann auch als kurze Hohlwelle auf der Hauptwelle w 4 ausgeführt werden.

Somit ergeben sich beispielhaft bei der zweiten Ausführungsvariante gemäß Figur 2 sechs Einfach-Radebenen und eine Doppel-Radebene mit insgesamt 15 Zahnrädern sowie ein als Bereichsgruppe ausgebildeter Planetenradsatz.

Das dazugehörige Schaltschema ist in Figur 2A mit beispielhaft angegebenen Übersetzungen i und Stufensprüngen k sowie der Spreizung dargestellt, wobei die jeweilige Betätigungsrichtung der Schaltelemente S 1, S 2, S 3, S 4 mit li für Links und mit re für rechts jeweils bezogen auf die Bewegungsrichtung der schematisch dargestellten Schaltelemente in der Zeichnungsebene der Figuren angegeben sind.

Aus dem Schaltschema ergibt sich beispielhaft, dass der erste Vorwärtsgang 1 über die zweite Kupplung K 2 und über das das Losrad z 52 mit der zweiten Vorgelegewelle w 3 verbindende dritte Schaltelement S 3 sowie über das das Hohlrad HR des Planetengetriebes mit dem Gehäuse verbindende vierte Schaltelement S 4 geschaltet wird, wobei der zweite Vorwärtsgang 2 über die erste Kupplung K 1 und über das die erste Getriebeeingangswelle w 1 mit der Hauptwelle w 4 verbindende erste Schaltelement S 1 sowie über das das Hohlrad HR des Planetengetriebes mit dem Gehäuse verbindende vierte Schaltelement S 4 geschaltet wird. Der dritte Vorwärtsgang 3 wird über die zweite Kupplung K 2 und über das das Losrad z 44 mit der Hauptwelle w 4 verbindende zweite Schaltelement S 2 sowie über das das Hohlrad HR des Planetengetriebes mit dem Gehäuse verbindende vierte Schaltelement S 4 geschaltet, wobei der vierte Vorwärtsgang 4 über die erste Kupplung K 1 und über das das Losrad z 31 mit der Hauptwelle w 4 verbindende erste Schaltelement S 1 sowie über das das Hohlrad HR des Planetengetriebes mit dem Gehäuse verbindende vierte Schaltelement S 4 geschaltet wird. Der fünfte Vorwärtsgang 5 wird über die zweite Kupplung K 2 und über das das Losrad z 72 mit der zweiten Vorgelegewelle w 3 verbindende dritte Schaltelement S 3 sowie über das dem Hohlrad HR des Planetengetriebes zugeordnete und in einer Neutralstellung N vorgesehene vierte Schaltelement S 4 geschaltet, wobei der sechste Vorwärtsgang 6 über die erste Kupplung K 1 und über das die erste Getriebeeingangswelle w 1 mit der Hauptwelle w 4 verbindende erste Schaltelement S 1 sowie über das das Hohlrad HR mit dem Planetenträger PT des Planetengetriebes verbindende vierte Schaltelement S 4 als Direktgang geschaltet wird. Der siebente Vorwärtsgang 7 wird über die zweite Kupplung K 2 und über das das Losrad z 44 mit der Hauptwelle w 4 verbindende zweite Schaltelement S 2 sowie über das das Hohlrad HR mit dem Planetenträger PT des Planetengetriebes verbindende vierte Schaltelement S 4 geschaltet, wobei der achte Vorwärtsgang 8 über die erste Kupplung K 1 und über das das Losrad z 31 mit der Hauptwelle w 4 verbindende erste Schaltelement S 1 sowie über das das Hohlrad HR mit dem Planetenträger PT des Planetengetriebes verbindende vierte Schaltelement S 4 geschaltet wird.

Zudem wird der Rückwärtsgang R 1 über die erste Kupplung K 1 und über das das Losrad z 64 mit der Hauptwelle w 4 verbindende zweite Schaltelement S 2 sowie über das das Hohlrad HR des Planetengetriebes mit dem Gehäuse verbindende vierte Schaltelement S 4 geschaltet, wobei der weitere Rückwärtsgang R 2 über die erste Kupplung K 1 und über das das Losrad z 64 mit der Hauptwelle w 4 verbindende zweite Schaltelement S 2 sowie über das das Hohlrad HR mit dem Planetenträger PT des Planetengetriebes verbindende vierte Schaltelement S 4 geschaltet wird.

Ferner wird der weitere Vorwärtsgang 5G als Bereichsgruppengang über die zweite Kupplung K 2 und über das das Losrad z 52 mit der zweiten Vorgelegewelle w 3 verbindende dritte Schaltelement S 3 sowie über das das Hohlrad HR mit dem Planetenträger PT des Planetengetriebes verbindende vierte Schaltelement S 4 geschaltet.

Bei der zweiten Ausführungsvariante gemäß Figur 2 sind somit der zweiten Radebene die Gänge 2 und 6, der dritten Radebene die Gänge 4 und 8, der vierten Radebene die Rückwärtsgänge R 1 und R 2, der fünften Radebene die Gänge 3 und 7, der sechsten Radebene die Gänge 1 und 5G sowie der siebenten Radebene der fünfte Gang 5 zugeordnet. Das Planetengetriebe als Bereichsgruppe ist sowohl dem abtriebsseitigen Ende der Hauptwelle w 4 als auch der Abtriebswelle w 5 zugeordnet, in dem das Sonnenrad SR mit der Hauptwelle w 4 und der Planetenträger PT mit der Abtriebswelle w 5 verbunden ist. Zum Schalten der Übersetzungsbereiche ist dem Hohlrad HR das vierte Schaltelement S 4 derart zugeordnet, dass das Hohlrad HR in einer ersten Schaltstellung, die in der Zeichnungsebene nach links gerichtet ist, mit dem Gehäuse verbunden ist und in einer zweiten Schaltstellung, die in der Zeichnungsebene nach rechts gerichtet ist, mit dem Planetenträger PT verbunden ist. Neben der Neutralstellung N kann das vierte Schaltelement S4 somit nach rechts geschaltet den Übersetzungsbereich ins Schnelle H und nach links geschaltet ins Langsame L realisieren. Bei der beispielhaften Auslegung des Radsatzes bedeutet der Übersetzungsbereich ins Schnelle H, dass das Sonnenrad SR mit gleicher Drehzahl wie der Planetenträger PT rotiert, wobei der Übersetzungsbereich ins Langsame L eine Untersetzung bedeutet.

Gemäß Figur 2B wird beispielhaft ein Schaltschema der zweiten Ausführungsvariante bezüglich der Lastschaltbarkeit der Gänge des Doppelkupplungsgetriebes angegeben. Aus diesem Schaltschema ergeben sich mit X gekennzeichnete Gangschaltungen bzw. Gangwechsel, welche lastschaltbar ausführbar sind.

Die zweite Ausführungsvariante gemäß Figur 2 zeichnet sich unter anderem dadurch aus, dass die Rückwärtsgangübersetzungen R1, R2 dem ersten Teilgetriebe zugeordnet sind. Dadurch ergibt sich der Vorteig, dass Schaltungen aus dem ersten Gang 1, welcher dem zweiten Teilgetriebe zugeordnet ist, in die Rückwärtsgänge R 1, R 2 oder umgekehrt lastschaltbar ausgeführt werden können.

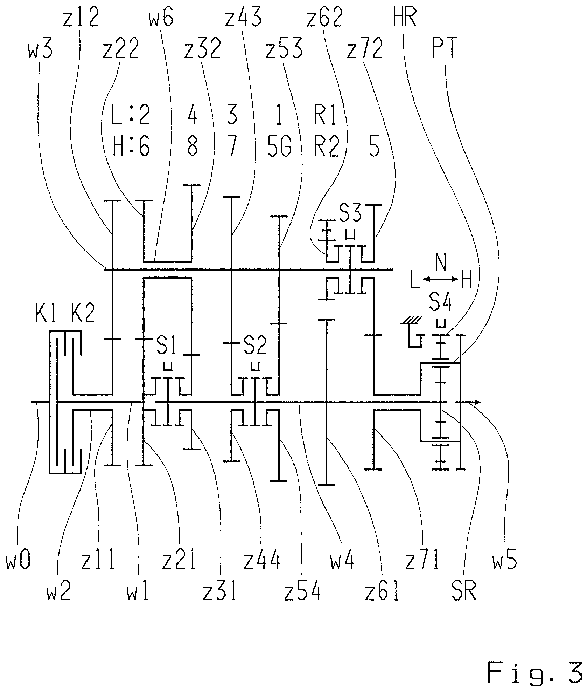

In Figur 3 ist im Wesentlichen ein nicht beanspruchtes Radsatzkonzept gemäß der zweiten Ausführungsvariante entsprechend Figur 2 dargestellt, wobei jedoch die Rückwärtsgangübersetzungen im Unterschied zu Figur 2 dem zweiten Teilgetriebe bzw. der zweiten Vorgelegewelle w 3 zugeordnet sind.

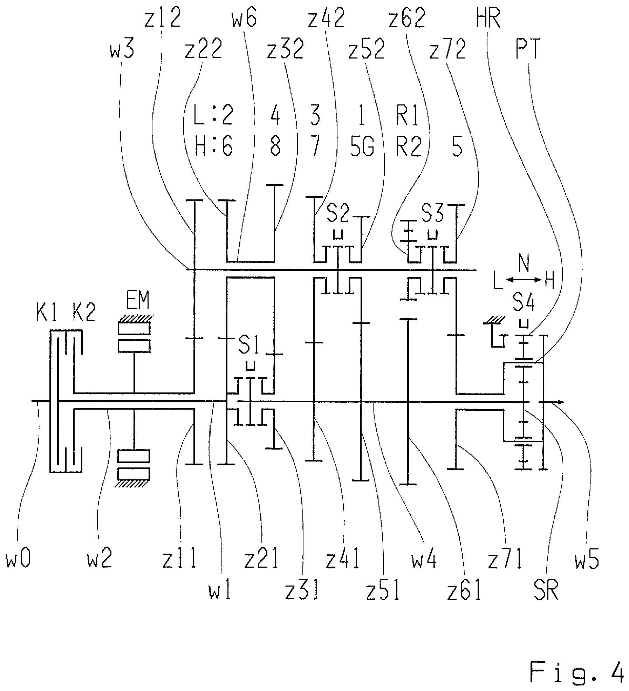

In Figur 4 ist beispielhaft anhand der ersten Ausführungsvariante ein Hybridkonzept dargestellt, bei dem die Elektromaschine EM an dem zweiten Teilgetriebe angebunden ist, indem die Elektromaschine EM direkt mit der zweiten Getriebeeingangswelle w 2 verbunden ist. Damit ergibt sich beim elektrischen Fahren über die Bereichsgruppe die Möglichkeit, die Übersetzungsstufen des ersten, dritten, fünften und siebenten Ganges sowie die Rückwärtsgangübersetzungen zu nutzen. Der Start des Verbrennungsmotors in Neutral kann beispielsweise direkt mit einer 1:1 Übersetzung über die zweite Getriebeeingangswelle w 2 erfolgen, wenn die zweite Kupplung K 2 geschlossen ist.

Mit besonderem Vorteil ergibt sich aufgrund der Abkopplungsmöglichkeit der Abtriebswelle über die Neutralschaltung der Bereichsgruppe auch die Verfahrensweise, dass der Start des Verbrennungsmotors über das erste Teilgetriebe erfolgen kann. Dazu kann z. B. der kleinste Gang 1 des zweiten Teilgetriebes und der größte Gang 8 des ersten Teilgetriebes verwendet werden, wenn bei geöffneter zweiter Kupplung K 2 das Losrad z 52 über das zweite Schaltelement S 2 mit der zweiten Vorgelegewelle w 3 und damit auch mit der zweiten Getriebeeingangswelle w 2 verbunden ist und zudem das Losrad z 31 über das erste Schaltelement S 1 mit der Hauptwelle w 4 und damit auch mit der ersten Getriebeeingangswelle w 1 verbunden ist und die erste Kupplung K 1 geschlossen ist sowie die Bereichsgruppe bzw. das vierte Schaltelement S 4 sich in ihrer bzw. seiner Neutralstellung N befindet, wie dies zum Beispiel in Figur 4 dargestellt ist. Somit ergibt sich eine günstige Übersetzung zwischen der elektrischen Maschine EM und dem Verbrennungsmotor beim Starten. Zum Starten des Verbrennungsmotors über das erste Teilgetriebe können aber auch andere Übersetzungsstufen als die vorgenannten eingesetzt werden.

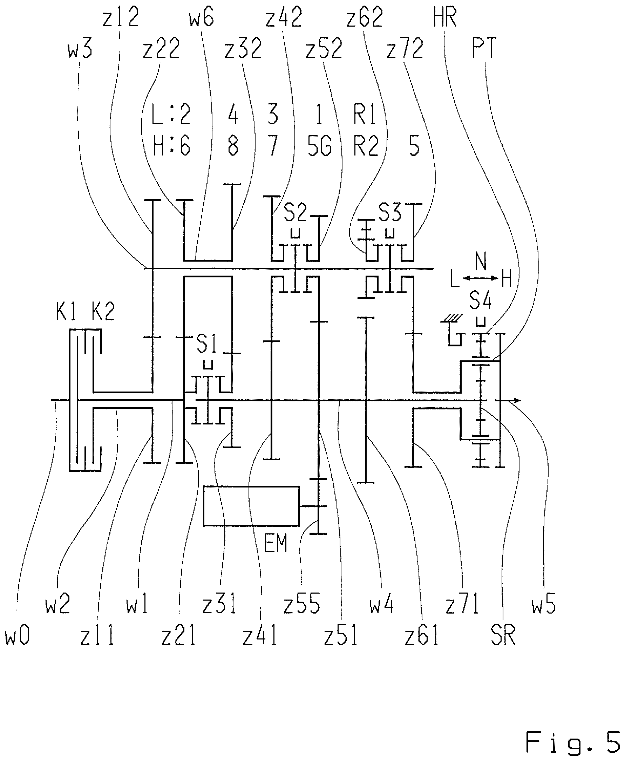

Gemäß Figur 5 ist ein weiteres Hybridkonzept beispielhaft anhand der ersten Ausführungsvariante dargestellt. Die elektrische Maschine EM ist bei diesem Konzept beispielsweise über eine Stirnradstufe aus dem Festrad bzw. Antriebsritzel z 55 der elektrischen Maschine EM und dem Festrad z 51 mit der Hauptwelle w 4 gekoppelt. Somit wird die elektrische Maschine EM seitlich bzw. achsparallel zur Vorgelegewelle w 3 über eine Stirnradstufe angebunden. Dadurch können zum elektrischen Fahren unter anderem die Gänge zwei und sechs verwendet werden. Ferner kann zum Verbrennungsmotorstart in neutral die größtmögliche Übersetzung verwendet werden, welche hier der achte Gang ist welches durch die Verbindung des Losrades z 31 über das zugeordnete erste Schaltelement S 1 und bei geschlossener erster Kupplung K 1 realisiert werden kann.

Es ergibt sich der Vorteil, dass die Doppelkupplung nicht bei rein elektrischem Fahren mitdreht, so dass keine Schleppverluste beim Fahren über die Teilgetriebe auftreten. Zudem kann die elektrische Maschine EM eine große Synchronisierung beispielsweise an dem vierten Schaltelement ersetzen, welches dem Hohlrad HR des Planetengetriebes zugeordnet ist.

Es ist auch denkbar, dass die Anbindung der elektrischen Maschine EM über eine zusätzliche Konstantübersetzung oder auch über ein zusätzliches Schaltelement zum An- bzw. Abkoppeln realisiert werden kann.

Die dargestellten Hybridkonzepte, die exemplarisch nur bei der ersten Ausführungsvariante dargestellt sind, können aber auch ohne weiteres bei der zweiten Ausführungsvariante gemäß Figur 2 vorgesehen werden.

### Bezugszeichen

- 1: erster Vorwärtsgang
- 2: zweiter Vorwärtsgang
- 3: dritter Vorwärtsgang
- 4: vierter Vorwärtsgang
- 5: fünfter Vorwärtsgang
- 5G: fünfter Vorwärtsgang als Bereichsgruppengang
- 6: sechster Vorwärtsgang
- 7: siebenter Vorwärtsgang
- 8: achter Vorwärtsgang
- R1: Rückwärtsgang
- R2: Rückwärtsgang
- w 0: Antriebswelle
- w 1: erste Getriebeeingangswelle des ersten Teilgetriebes
- w 2: zweite Getriebeeingangswelle des zweiten Teilgetriebes
- w 6: erste Vorgelegewelle
- w 3: zweite Vorgelegewelle
- w 4: Hauptwelle
- w 5: Abtriebswelle
- K 1: erste Kupplung
- K 2: zweite Kupplung
- z 11: Festrad der zweiten Getriebeeingangswelle
- z 21: Festrad der ersten Getriebeeingangswelle
- z 22: Festrad der ersten Vorgelegewelle
- z 32: Festrad der ersten Vorgelegewelle
- z 63: Festrad der ersten Vorgelegewelle
- z 12: Festrad der zweiten Vorgelegewelle
- z 43: Festrad der zweiten Vorgelegewelle
- z 53: Festrad der zweiten Vorgelegewelle
- z 42: Losrad der zweiten Vorgelegewelle
- z 52: Losrad der zweiten Vorgelegewelle
- z 62: Losrad der zweiten Vorgelegewelle
- z 72: Losrad der zweiten Vorgelegewelle
- z 31: Losrad der Hauptwelle
- z 71: nichtschaltbares Losrad der Hauptwelle
- z 64: Losrad der Hauptwelle
- z 44: Losrad der Hauptwelle
- z 54: Losrad der Hauptwelle
- z 41: Festrad der Hauptwelle
- z 51: Festrad der Hauptwelle
- z 61: Festrad der Hauptwelle
- z 55: Festrad bzw. Antriebsritzel der EM
- SR: Sonnenrad des Planetengetriebes bzw. der Bereichsgruppe
- HR: Hohlrad des Planetengetriebes bzw. der Bereichsgruppe
- PT: Planetenträger des Planetengetriebes bzw. der Bereichsgruppe
- zr: Zwischenrad zur Drehzahlumkehr für Rückwärtsgangübersetzung
- EM: elektrische Maschine
- H: high Bereich der Bereichsgruppe
- L: low Bereich der Bereichsgruppe
- N: Neutralstellung der Bereichsgruppe bzw. des Schaltelementes
- S 1: erstes doppeltwirkendes Schaltelement
- S 2: zweites doppeltwirkendes Schaltelement
- S 3: drittes doppeltwirkendes Schaltelement
- S 4: viertes doppeltwirkendes Schaltelement

## Patentansprüche

1. Doppelkupplungsgetriebe mit zwei Kupplungen (K 1, K 2), deren Eingangsseiten mit einer Antriebswelle (w 0) und deren Ausgangsseiten mit jeweils einer von zwei koaxial zueinander angeordneten Getriebeeingangswellen, einer ersten Getriebeeingangswelle und einer zweiten Getriebeeingangswelle (w 1, w 2), von Teilgetrieben verbunden sind, und mit zwei koaxial zueinander angeordneten Vorgelegewellen (w 3, w 6), wobei jedem Teilgetriebe, einem ersten und einem zweiten Teilgetriebe, mehrere schaltbare Übersetzungsstufen zugeordnet sind, die jeweils über die zugeordnete Vorgelegewelle (w 3, w 6) und über eine mit einem Eingangsglied eines als Bereichsgruppe ausgebildeten Planetengetriebes verbundenen Hauptwelle (w4) mit einer Abtriebswelle (w 5) koppelbar sind, wobei die Abtriebswelle (w 5) koaxial zur Antriebswelle (w 0) angeordnet ist, und eine unabhängig von der Bereichsgruppe schaltbare Übersetzungsstufe unabhängig von der Bereichsgruppe mit der Abtriebswelle (w 5) koppelbar ist wobei zum sequenziellen lastschaltbaren Schalten der ersten acht Vorwärtsgänge vier doppelt wirkende Schaltelemente (S 1, S 2, S 3, S 4) vorgesehen sind, wobei der mit der ersten Getriebeeingangswelle (w 1) verbundenen Vorgelegewelle (w 6) ein erstes und ein zweites Festrad (z 22, z 32) zugeordnet sind, und wobei ein antriebsseitiges Ende der Hauptwelle (w 4) über das erste doppeltwirkende Schaltelement (S 1) mit der ersten Getriebeeingangswelle (w 1) verbindbar ist und ein abtriebsseitiges Ende der Hauptwelle (w 4) mit einem Sonnenrad (SR) eines als Bereichsgruppe ausgebildeten Planetengetriebes verbunden ist, **dadurch gekennzeichnet, dass** , dass der mit der zweiten Getriebeeingangswelle (w 2) verbundenen Vorgelegewelle (w 3) ein drittes Festrad (z 12) und ein erstes, ein zweites, ein drittes und ein viertes Losrad (z 42, z 52, z 62, z 72) zugeordnet sind, wobei das erste und das zweite dieser Losräder (z 42, z 52) von einem zweiten doppeltwirkenden Schaltelement (S 2) und das dritte und das vierte dieser Losräder (z 62, z 72) von einem dritten doppeltwirkenden Schaltelement (S 3) schaltbar sind, und dass der Hauptwelle (w 4) ein viertes, ein fünftes und ein sechstes Festrad (z 41, z 51, z 61) und ein fünftes und ein sechstes Losrad (z 31, z 71) zugeordnet sind, wobei das fünfte Losrad (z 31) von einem ersten doppeltwirkenden Schaltelement (S 1) schaltbar ist und das sechste Losrad (z 71) nicht schaltbar ist.

2. Doppelkupplungsgetriebe nach Anspruch 1, **dadurch gekennzeichnet, dass** die unabhängig von der Bereichsgruppe schaltbare Übersetzungsstufe des ersten Teilgetriebes über einen Planetenträger (PT) des Planetengetriebes direkt mit der Abtriebswelle (w 5) verbunden ist, wobei ein einem Hohlrad (HR) zugeordnetes viertes Schaltelement (S 4) in eine Neutralstellung (N) geschaltet ist.

3. Doppelkupplungsgetriebe nach Anspruch 2, **dadurch gekennzeichnet, dass** weitere Übersetzungsstufen über zumindest eine der Vorgelegewellen (w 3, w 6) und über die Hauptwelle (w 4) mit dem Sonnenrad (SR) des Planetengetriebes gekoppelt sind, wobei je nach Schaltstellung des dem Hohlrad (HR) zugeordneten vierten Schaltelementes (S4) eine Bereichsübersetzung ins Schnelle (H) oder ins Langsame (L) erfolgt.

4. Doppelkupplungsgetriebe nach einem der vorangehenden Ansprüche,
**dadurch gekennzeichnet, dass** den beiden Getriebeeingangswellen (w 1, w 2) der Teilgetriebe jeweils ein siebtes und ein achtes Festrad (z 11, z 21) als Antriebskonstante zugeordnet ist, welches jeweils mit einem zugeordneten Festrad, dem dritten und dem ersten Festrad (z 12, z 22), der Vorgelegewelle (w 3, w 6) in Eingriff steht, wobei insgesamt sieben Radebenen, einer ersten, einer zweiten, einer dritten, einer vierten, einer fünften, einer sechsten und einer siebten Radebene, als Stirnradstufen vorgesehen sind.

5. Doppelkupplungsgetriebe nach Anspruch 4, **dadurch gekennzeichnet, dass** in der ersten Radebene das siebte Festrad (z 11) der zweiten Getriebeeingangswelle (w 2) mit dem dritten Festrad (z 12) der zweiten Vorgelegewelle (w 3) kämmt, dass in der zweiten Radebene das achte Festrad (z 21) der ersten Getriebeeingangswelle (w 1) mit dem ersten Festrad (z 22) der ersten Vorgelegewelle (w 6) kämmt, dass in der dritten Radebene das fünfte Losrad (z 31) der Hauptwelle (w 4) mit dem zweiten Festrad (z 32) der ersten Vorgelegewelle (w 6) kämmt, dass in der vierten Radebene das vierte Festrad (z 41) der Hauptwelle (w 4) mit dem ersten Losrad (z 42) der zweiten Vorgelegewelle (w 3) kämmt, dass in der fünften Radebene das fünfte Festrad (z 51) der Hauptwelle (w 4) mit dem zweiten Losrad (z 52) der zweiten Vorgelegewelle (w 3) kämmt, dass in der sechsten Radebene das sechste Festrad (z 61) der Hauptwelle (w 4) mit einem Zwischenrad (zr) zur Drehzahlumkehr für eine Rückwärtsgangübersetzungen kämmt, wobei das Zwischenrad (zr) mit dem dritten Losrad (z 62) der zweiten Vorgelegewelle (w 3) kämmt, und dass in der siebenten Radebene das sechste Losrad (z 71) der Hauptwelle (w 4) mit dem vierten Losrad (z 72) der zweiten Vorgelegewelle (w 3) kämmt, wobei dieses sechste Losrad (z 71) der Hauptwelle (w4) über den Planetenträger (PT) des Planetengetriebes mit der Abtriebswelle (w 5) verbunden ist.

6. Doppelkupplungsgetriebe nach einem der Ansprüche, 2, 3, 4 oder 5,
**dadurch gekennzeichnet, dass** ein erster Vorwärtsgang (1) über die zweite Kupplung (K 2) und über das zweite Losrad (z 52) der zweiten Vorgelegewelle (w3) mit der zweiten Vorgelegewelle (w 3) verbindende zweite Schaltelement (S 2) sowie über das das Hohlrad (HR) des Planetengetriebes mit dem Gehäuse verbindende vierte Schaltelement (S 4) schaltbar ist, dass ein zweiter Vorwärtsgang (2) über die erste Kupplung (K 1) und über das die erste Getriebeeingangswelle (w 1) mit der Hauptwelle (w 4) verbindende erste Schaltelement (S 1) sowie über das das Hohlrad (HR) des Planetengetriebes mit einem Gehäuse verbindende vierte Schaltelement (S 4) schaltbar ist, dass ein dritter Vorwärtsgang (3) über die zweite Kupplung (K 2) und über das das erste Losrad (z 42) der zweiten Vorgelegewelle (w3) mit der zweiten Vorgelegewelle (w 3) verbindende zweite Schaltelement (S 2) sowie über das das Hohlrad (HR) des Planetengetriebes mit dem Gehäuse verbindende vierte Schaltelement (S 4) schaltbar ist, dass ein vierter Vorwärtsgang (4) über die erste Kupplung (K 1) und über das das fünfte Losrad (z 31) mit der Hauptwelle (w 4) verbindende erste Schaltelement (S 1) sowie über das das Hohlrad (HR) des Planetengetriebes mit dem Gehäuse verbindende vierte Schaltelement (S 4) schaltbar ist, dass ein fünfter Vorwärtsgang (5) über die zweite Kupplung (K 2) und über das das vierte Losrad (z 72) der zweiten Vorgelegewelle (w3) mit der zweiten Vorgelegewelle (w 3) verbindende dritte Schaltelement (S 3) sowie über das dem Hohlrad (HR) des Planetengetriebes zugeordnete und in einer Neutralstellung (N) vorgesehene vierte Schaltelement (S 4) schaltbar ist, dass ein sechster Vorwärtsgang (6) über die erste Kupplung (K 1) und über das die erste Getriebeeingangswelle (w 1) mit der Hauptwelle (w 4) verbindende erste Schaltelement (S 1) sowie über das das Hohlrad (HR) mit dem Planetenträger (PT) des Planetengetriebes verbindende vierte Schaltelement (S 4) als Direktgang schaltbar ist, dass ein siebenter Vorwärtsgang (7) über die zweite Kupplung (K 2) und über das das erste Losrad (z 42) der zweiten Vorgelegewelle (w3) mit der zweiten Vorgelegewelle (w 3) verbindende zweite Schaltelement (S 2) sowie über das das Hohlrad (HR) mit dem Planetenträger (PT) des Planetengetriebes verbindende vierte Schaltelement (S 4) schaltbar ist und dass ein achter Vorwärtsgang (8) über die erste Kupplung (K 1) und über das das fünfte Losrad (z 31) der Hauptwelle (w4) mit der Hauptwelle (w 4) verbindende erste Schaltelement (S 1) sowie über das das Hohlrad (HR) mit dem Planetenträger (PT) des Planetengetriebes verbindende vierte Schaltelement (S 4) schaltbar ist.

7. Doppelkupplungsgetriebe nach einem der Ansprüche 2, 3, 4, 5 oder 6,
**dadurch gekennzeichnet, dass** ein Rückwärtsgang (R 1) über die zweite Kupplung (K 2) und über das das dritte Losrad (z 62) der zweiten Vorgelegewelle (w3) mit der zweiten Vorgelegewelle (w 3) verbindende dritte Schaltelement (S 3) sowie über das das Hohlrad (HR) des Planetengetriebes mit dem Gehäuse verbindende vierte Schaltelement (S 4) schaltbar ist, und dass ein weiterer Rückwärtsgang (R 2) über die zweite Kupplung (K 2) und über das das dritte Losrad (z 62) der zweiten Vorgelegewelle (w3) mit der zweiten Vorgelegewelle (w 3) verbindende dritte Schaltelement (S 3) sowie über das das Hohlrad (HR) mit dem Planetenträger (PT) des Planetengetriebes verbindende vierte Schaltelement (S 4) schaltbar ist.

8. Doppelkupplungsgetriebe nach einem der Ansprüche 2, 3, 4, 5, 6 oder 7,
**dadurch gekennzeichnet, dass** ein weiterer Vorwärtsgang (5G) als Bereichsgruppengang über die zweite Kupplung (K 2) und über das das zweite Losrad (z 52) der zweiten Vorgelegewelle (w3) mit der zweiten Vorgelegewelle (w 3) verbindende zweite Schaltelement (S 2) sowie über das das Hohlrad (HR) mit dem Planetenträger (PT) des Planetengetriebes verbindende vierte Schaltelement (S 4) schaltbar ist.

9. Doppelkupplungsgetriebe mit zwei Kupplungen (K 1, K 2), deren Eingangsseiten mit einer Antriebswelle (w 0) und deren Ausgangsseiten mit jeweils einer von zwei koaxial zueinander angeordneten Getriebeeingangswellen, einer ersten Getriebeeingangswelle und einer zweiten Getriebeeingangswelle (w 1, w 2), von Teilgetrieben verbunden sind, und mit zwei koaxial zueinander angeordneten Vorgelegewellen (w 3, w 6), wobei jedem Teilgetriebe, einem ersten und einem zweiten Teilgetriebe, mehrere schaltbare Übersetzungsstufen zugeordnet sind, die jeweils über die zugeordnete Vorgelegewelle (w 3, w 6) und über eine mit einem Eingangsglied eines als Bereichsgruppe ausgebildeten Planetengetriebes verbundenen Hauptwelle (w4) mit einer Abtriebswelle (w 5) koppelbar sind, wobei die Abtriebswelle (w 5) koaxial zur Antriebswelle (w 0) angeordnet ist, und eine unabhängig von der Bereichsgruppe schaltbare Übersetzungsstufe unabhängig von der Bereichsgruppe mit der Abtriebswelle (w 5) koppelbar ist wobei zum sequenziellen lastschaltbaren Schalten der ersten acht Vorwärtsgänge vier doppelt wirkende Schaltelemente (S 1, S 2, S 3, S 4) vorgesehen sind, und wobei ein antriebsseitiges Ende der Hauptwelle (w 4) über das erste doppeltwirkende Schaltelement (S 1) mit der ersten Getriebeeingangswelle (w 1) verbindbar ist und ein abtriebsseitiges Ende der Hauptwelle (w 4) mit einem Sonnenrad (SR) des als Bereichsgruppe ausgebildeten Planetengetriebes verbunden ist, **dadurch gekennzeichnet, dass** der mit der ersten Getriebeeingangswelle (w 1) verbundenen Vorgelegewelle (w 6) ein erstes, ein zweites und ein drittes Festrad (z 22, z 32, z 63) zugeordnet sind, dass der mit der zweiten Getriebeeingangswelle (w 2) verbundenen Vorgelegewelle (w 3) ein viertes und ein fünftes Festrad (z 12, z 43) und zwei Losräder, ein erstes und ein zweites Losrad (z 52, z 72), zugeordnet sind, wobei die zwei Losräder (z 52, z 72) von dem dritten doppeltwirkenden Schaltelement (S 3) schaltbar sind, und dass der Hauptwelle (w 4) ein sechstes Festrad (z 51) und vier Losräder, ein drittes, viertes, fünftes und sechstes Losrad (z 31, z 64, z 44, z 71), zugeordnet sind, wobei das dritte Losrad (z 31) von dem ersten doppeltwirkenden Schaltelement (S 1) schaltbar ist und zwei dieser Losräder, das vierte und fünfte Losrad (z 64, z 44), von dem zweiten doppeltwirkenden Schaltelement (S 2) schaltbar sind sowie eines dieser Losräder, das sechste Losrad (z 71), nicht schaltbar ist.

10. Doppelkupplungsgetriebe nach Anspruch 9, **dadurch gekennzeichnet, dass** in einer ersten Radebene ein siebtes Festrad (z 11) der zweiten Getriebeeingangswelle (w 2) mit dem vierten Festrad (z 12) der zweiten Vorgelegewelle (w 3) kämmt, dass in einer zweiten Radebene ein achtes Festrad (z 21) der ersten Getriebeeingangswelle (w 1) mit dem ersten Festrad (z 22) der ersten Vorgelegewelle (w 6) kämmt, dass in einer dritten Radebene das dritte Losrad (z 31) der Hauptwelle (w 4) mit dem zweiten Festrad (z 32) der ersten Vorgelegewelle (w 6) kämmt, dass in einer vierten Radebene das vierte Losrad (z 64) der Hauptwelle (w 4) mit einem Zwischenrad (zr) zur Drehzahlumkehr für die Rückwärtsgangübersetzungen kämmt, wobei das Zwischenrad (zr) auch mit dem dritten Festrad (z 63) der ersten Vorgelegewelle (w 6) kämmt, dass in einer fünften Radebene das fünfte Festrad (z 43) der zweiten Vorgelegewelle (w 3) mit dem fünften Losrad (z 44) der Hauptwelle (w 4) kämmt, dass in einer sechsten Radebene das sechste Festrad (z 51) der Hauptwelle (w 4) mit dem ersten Losrad (z 52) der zweiten Vorgelegewelle (w 3) kämmt, und dass in einer siebenten Radebene das sechste Losrad (z 71) der Hauptwelle (w 4) mit dem zweiten Losrad (z 72) der zweiten Vorgelegewelle (w 3) kämmt, wobei dieses zweite Losrad (z 71) der Hauptwelle (w4) über den Planetenträger (PT) des Planetengetriebes mit der Abtriebswelle (w 5) verbunden ist.

11. Doppelkupplungsgetriebe nach Anspruch 10, **dadurch gekennzeichnet, dass** ein erster Vorwärtsgang (1) über die zweite Kupplung (K 2) und über das das erste Losrad (z 52) mit der zweiten Vorgelegewelle (w 3) verbindende dritte Schaltelement (S 3) sowie über das das Hohlrad (HR) des Planetengetriebes mit dem Gehäuse verbindende vierte Schaltelement (S 4) schaltbar ist, dass ein zweiter Vorwärtsgang (2) über die erste Kupplung (K 1) und über das die erste Getriebeeingangswelle (w 1) mit der Hauptwelle (w 4) verbindende erste Schaltelement (S 1) sowie über das das Hohlrad (HR) des Planetengetriebes mit dem Gehäuse verbindende vierte Schaltelement (S 4) schaltbar ist, dass ein dritter Vorwärtsgang (3) über die zweite Kupplung (K 2) und über das das fünfte Losrad (z 44) mit der Hauptwelle (w 4) verbindende zweite Schaltelement (S 2) sowie über das das Hohlrad (HR) des Planetengetriebes mit dem Gehäuse verbindende vierte Schaltelement (S 4) schaltbar ist, dass ein vierter Vorwärtsgang (4) über die erste Kupplung (K 1) und über das das dritte Losrad (z 31) mit der Hauptwelle (w 4) verbindende erste Schaltelement (S 1) sowie über das das Hohlrad (HR) des Planetengetriebes mit dem Gehäuse verbindende vierte Schaltelement (S 4) schaltbar ist, dass ein fünfter Vorwärtsgang (5) über die zweite Kupplung (K 2) und über das das zweite Losrad (z 72) mit der zweiten Vorgelegewelle (w 3) verbindende dritte Schaltelement (S 3) sowie über das dem Hohlrad (HR) des Planetengetriebes zugeordnete und in einer Neutralstellung (N) vorgesehene vierte Schaltelement (S 4) schaltbar ist, dass ein sechster Vorwärtsgang (6) über die erste Kupplung (K 1) und über das die erste Getriebeeingangswelle (w 1) mit der Hauptwelle (w 4) verbindende erste Schaltelement (S 1) sowie über das das Hohlrad (HR) mit dem Planetenträger (PT) des Planetengetriebes verbindende vierte Schaltelement (S 4) als Direktgang schaltbar ist, dass ein siebenter Vorwärtsgang (7) über die zweite Kupplung (K 2) und über das das fünfte Losrad (z 44) mit der Hauptwelle (w 4) verbindende zweite Schaltelement (S 2) sowie über das das Hohlrad (HR) mit dem Planetenträger (PT) des Planetengetriebes verbindende vierte Schaltelement (S 4) schaltbar ist und dass ein achter Vorwärtsgang (8) über die erste Kupplung (K 1) und über das das dritte Losrad (z 31) mit der Hauptwelle (w 4) verbindende erste Schaltelement (S 1) sowie über das das Hohlrad (HR) mit dem Planetenträger (PT) des Planetengetriebes verbindende vierte Schaltelement (S 4) schaltbar ist.

12. Doppelkupplungsgetriebe nach einem der Ansprüche 10 oder 11, **dadurch gekennzeichnet, dass** ein Rückwärtsgang (R 1) über die erste Kupplung (K 1) und über das das vierte Losrad (z 64) mit der Hauptwelle (w 4) verbindende zweite Schaltelement (S 2) sowie über das das Hohlrad (HR) des Planetengetriebes mit dem Gehäuse verbindende vierte Schaltelement (S 4) schaltbar ist, und dass der weiterer Rückwärtsgang (R 2) über die erste Kupplung (K 1) und über das das vierte Losrad (z 64) mit der Hauptwelle (w 4) verbindende zweite Schaltelement (S 2) sowie über das das Hohlrad (HR) mit dem Planetenträger (PT) des Planetengetriebes verbindende vierte Schaltelement (S 4) schaltbar ist.

13. Doppelkupplungsgetriebe nach einem der Ansprüche 10 bis 12, **dadurch gekennzeichnet, dass** ein weiterer Vorwärtsgang (5G) als Bereichsgruppengang über die zweite Kupplung (K 2) und über das das erste Losrad (z 52) mit der zweiten Vorgelegewelle (w 3) verbindende dritte Schaltelement (S 3) sowie über das das Hohlrad (HR) mit dem Planetenträger (PT) des Planetengetriebes verbindende vierte Schaltelement (S 4) schaltbar ist.

14. Doppelkupplungsgetriebe nach einem der vorangehenden Ansprüche, **dadurch gekennzeichnet, dass** die Hauptwelle (w 4) koaxial zur Antriebswelle (w 0) und zur Abtriebswelle (w 5) angeordnet ist.

15. Doppelkupplungsgetriebe nach einem der vorangehenden Ansprüche, **dadurch gekennzeichnet, dass** die erste der ersten Getriebeeingangswelle (w 1) zugeordnete Vorgelegewelle (w 6) als Hohlwelle und die zweite der zweiten Getriebeeingangswelle (w 2) zugeordnete Vorgelegewelle (w 3) als Vollwelle ausgeführt sind.

16. Doppelkupplungsgetriebe nach einem der vorangehenden Ansprüche, **dadurch gekennzeichnet, dass** zumindest eine elektrische Maschine (EM) direkt oder indirekt mit der Hauptwelle (w 4) gekoppelt ist.

17. Doppelkupplungsgetriebe nach einem der vorangehenden Ansprüche, **dadurch gekennzeichnet, dass** zumindest eine elektrische Maschine (EM) direkt oder indirekt mit der zweiten Getriebeeingangswelle (w 2) gekoppelt ist.

18. Doppelkupplungsgetriebe nach einem der vorangehenden Ansprüche, **dadurch gekennzeichnet, dass** zumindest neun Vorwärtsgänge (1, 2, 3, 4, 5, 5G, 6, 7, 8) und zumindest zwei Rückwärtsgänge (R1, R2) schaltbar sind, wobei zumindest einer der Vorwärtsgänge (6, 8) als Direktgang ausführbar ist.

## Claims

1. Double clutch transmission having two clutches (K 1, K 2), the input sides of which are connected to a drive shaft (w 0) and the output sides of which are connected to in each case one of two transmission input shafts which are arranged coaxially with respect to one another, a first transmission input shaft and a second transmission input shaft (w 1, w 2) of component transmissions, and having two countershafts (w 3, w 6) which are arranged coaxially with respect to one another, each component transmission, a first and a second component transmission, being assigned a plurality of selectable transmission stages which can be coupled to an output shaft (w 5) in each case via the associated countershaft (w 3, w 6) and via a main shaft (w4) which is connected to an input member of a planetary gear mechanism which is configured as a range group, the output shaft (w 5) being arranged coaxially with respect to the drive shaft (w 0), and it being possible for a transmission stage which can be selected independently of the range group to be coupled to the output shaft (w 5) independently of the range group, four double-acting shifting elements (S 1, S 2, S 3, S 4) being provided for sequential power-shift shifting of the first eight forward gears, the countershaft (w 6) which is connected to the first transmission input shaft (w 1) being assigned a first and a second fixed gear (z 22, z 32), and it being possible for a drive side end of the main shaft (w 4) to be connected via the first double-acting shifting element (S 1) to the first transmission input shaft (w 1), and an output-side end of the main shaft (w 4) being connected to a sun gear (SR) of a planetary gear mechanism which is configured as a range group, **characterized in that** the countershaft (w 3) which is connected to the second transmission input shaft (w 2) is assigned a third fixed gear (z 12) and a first, a second, a third and a fourth movable gear (z 42, z 52, z 62, z 72), it being possible for the first and the second of the said movable gears (z 42, z 52) to be selected by a second double-acting shifting element (S 2) and for the third and the fourth of the said movable gears (z 62, z 72) to be shifted by means of a third double-acting shifting element (S 3), and **in that** the main shaft (w 4) is assigned a fourth, a fifth and a sixth fixed gear (z 41, z 51, z 61) and a fifth and a sixth movable gear (z 31, z 71), it being possible for the fifth movable gear (z 31) to be selected by means of a first double-acting shifting element (S 1), and it not being possible for the sixth movable gear (z 71) to be selected.

2. Double clutch transmission according to Claim 1, **characterized in that** the transmission stage of the first component transmission which can be selected independently of the range group is connected via a planetary carrier (PT) of the planetary gear mechanism directly to the output shaft (w 5), a fourth shifting element (S 4) which is assigned to an internal gear (HR) being shifted into a neutral position (N).

3. Double clutch transmission according to Claim 2, **characterized in that** further transmission stages are coupled via at least one of the countershafts (w 3, w 6) and via the main shaft (w 4) to the sun gear (SR) of the planetary gear mechanism, a step-up (H) or stepdown (L) range transmission ratio being effected depending on the shifting position of the fourth shifting element (S4) which is assigned to the internal gear (HR).

4. Double clutch transmission according to one of the preceding claims, **characterized in that** the two transmission input shafts (w 1, w 2) of the component transmissions are assigned in each case a seventh and an eighth fixed gear (z 11, z 21) as a drive constant which is in engagement in each case with an associated fixed gear, the third and the first fixed gear (z 12, z 22), of the countershafts (w 3, w 6), a total of seven gear planes, a first, a second, a third, a fourth, a fifth, a sixth and seventh gear plane, being provided as spur gear stages.

5. Double clutch transmission according to Claim 4, **characterized in that**, in the first gear plane, the seventh fixed gear (z 11) of the second transmission input shaft (w 2) meshes with the third fixed gear (z 12) of the second countershaft (w 3), **in that**, in the second gear plane, the eighth fixed gear (z 21) of the first transmission input shaft (w 1) meshes with the first fixed gear (z 22) of the first countershaft (w 6), **in that**, in the third gear plane, the fifth movable gear (z 31) of the main shaft (w 4) meshes with the second fixed gear (z 32) of the first countershaft (w 6), **in that**, in the fourth gear plane, the fourth fixed gear (z 41) of the main shaft (w 4) meshes with the first movable gear (z 42) of the second countershaft (w 3), **in that**, in the fifth gear plane, the fifth fixed gear (z 51) of the main shaft (w 4) meshes with the second movable gear (z 52) of the second countershaft (w 3), **in that**, in the sixth gear plane, the sixth fixed gear (z 61) of the main shaft (w 4) meshes with an intermediate gear (zr) for rotational speed reversal for a reverse gear transmission ratio, the intermediate gear (zr) meshing with the third movable gear (z 62) of the second countershaft (w 3), and **in that**, in the seventh gear plane, the sixth movable gear (z 71) of the main shaft (w 4) meshes with the fourth movable gear (z 72) of the second countershaft (w 3), the said sixth movable gear (z 71) of the main shaft (w 4) being connected via the planetary carrier (PT) of the planetary gear mechanism to the output shaft (w 5).

6. Double clutch transmission according to one of Claims 2, 3, 4 or 5, **characterized in that** a first forward gear (1) can be selected via the second clutch (K 2) and via the second shifting element (S 2) which connects second movable gear (z 52) of the second countershaft (w3) to the second countershaft (w 3), and via the fourth switching element (S 4) which connects the internal gear (HR) of the planetary gear mechanism to the housing, **in that** a second forward gear (2) can be selected via the first clutch (K 1) and via the first shifting element (S 1) which connects the first transmission input shaft (w 1) to the main shaft (w 4), and via the fourth shifting element (S 4) which connects the internal gear (HR) of the planetary gear mechanism to a housing, **in that** a third forward gear (3) can be selected via the second clutch (K 2) and via the second shifting element (S 2) which connects the first movable gear (z 42) of the second countershaft (w3) to the second countershaft (w 3), and via the fourth shifting element (S 4) which connects the internal gear (HR) of the planetary gear mechanism to the housing, **in that** a fourth forward gear (4) can be selected via the first clutch (K 1) and via the first shifting element (S 1) which connects the fifth movable gear (z 31) to the main shaft (w 4), and via the fourth shifting element (S 4) which connects the internal gear (HR) of the planetary gear mechanism to the housing, **in that** a fifth forward gear (5) can be selected via the second clutch (K 2) and via the third shifting element (S 3) which connects the fourth movable gear (z 72) of the second countershaft (w3) to the second countershaft (w 3), and via the fourth shifting element (S 4) which is assigned to the internal gear (HR) of the planetary gear mechanism and is provided in a neutral position (N), **in that** a sixth forward gear (6) can be selected as a direct gear via the first clutch (K 1) and via the first shifting element (S 1) which connects the first transmission input shaft (w 1) to the main shaft (w 4), and via the fourth shifting element (S 4) which connects the internal gear (HR) to the planetary carrier (PT) of the planetary gear mechanism, **in that** a seventh forward gear (7) can be selected via the second clutch (K 2) and via the second shifting element (S 2) which connects the first movable gear (z 42) of the second countershaft (w3) to the second countershaft (w 3), and via the fourth shifting element (S 4) which connects the internal gear (HR) to the planetary carrier (PT) of the planetary gear mechanism, and **in that** an eighth forward gear (8) can be selected via the first clutch (K 1) and via the first shifting element (S 1) which connects the fifth movable gear (z 31) of the main shaft (w4) to the main shaft (w 4), and via the fourth shifting element (S 4) which connects the internal gear (HR) to the planetary carrier (PT) of the planetary gear mechanism.

7. Double clutch transmission according to one of Claims 2, 3, 4, 5 or 6, **characterized in that** a reverse gear (R 1) can be selected via the second clutch (K 2) and via the third shifting element (S 3) which connects the third movable gear (z 62) of the second countershaft (w3) to the second countershaft (w 3), and via the fourth shifting element (S 4) which connects the internal gear (HR) of the planetary gear mechanism to the housing, and **in that** a further reverse gear (R 2) can be selected via the second clutch (K 2) and via the third shifting element (S 3) which connects the third movable gear (z 62) of the second countershaft (w3) to the second countershaft (w 3), and via the fourth shifting element (S 4) which connects the internal gear (HR) to the planetary carrier (PT) of the planetary gear mechanism.

8. Double clutch transmission according to one of Claims 2, 3, 4, 5, 6 or 7, **characterized in that** a further forward gear (5G) can be selected as a range group gear via the second clutch (K 2) and via the second shifting element (S 2) which connects the second movable gear (z 52) of the second countershaft (w3) to the second countershaft (w 3), and via the fourth shifting element (S 4) which connects the internal gear (HR) to the planetary carrier (PT) of the planetary gear mechanism.

9. Double clutch transmission having two clutches (K 1, K 2), the input sides of which are connected to a drive shaft (w 0) and the output sides of which are connected to in each case one of two transmission input shafts which are arranged coaxially with respect to one another, a first transmission input shaft and a second transmission input shaft (w 1, w 2), of component transmissions, and having two countershafts (w 3, w 6) which are arranged coaxially with respect to each other, each component transmission, a first and a second component transmission, being assigned a plurality of selectable transmission stages which can be coupled to an output shaft (w 5) in each case via the associated countershaft (w 3, w 6) and via a main shaft (w 4) which is connected to an input member of a planetary gear mechanism which is configured as a range group, the output shaft (w 5) being arranged coaxially with respect to the drive shaft (w 0), and it being possible for a transmission stage which can be selected independently of the range group to be coupled to the output shaft (w 5) independently of the range group, four double-acting shifting elements (S 1, S 2, S 3, S 4) being provided for the sequential power-shift shifting of the first eight forward gears, and it being possible for a drive-side end of the main shaft (w 4) to be coupled via the first double-acting shifting element (S 1) to the first transmission input shaft (w 1), and an output-side end of the main shaft (w 4) being connected to a sun gear (SR) of the planetary gear mechanism which is configured as a range group, **characterized in that** the countershaft (w 6) which is connected to the first transmission input shaft (w 1) is assigned a first, a second and a third fixed gear (z 22, z 32, z 63), **in that** the countershaft (w 3) which is connected to the second transmission input shaft (w 2) is assigned a fourth and a fifth fixed gear (z 12, z 43) and two movable gears, a first and a second movable gear (z 52, z 72), it being possible for the two movable gears (z 52, z 72) to be selected by the third double-acting shifting element (S 3), and **in that** the main shaft (w 4) is assigned a sixth fixed gear (z 51) and four movable gears, a third, fourth, fifth and sixth movable gear (z 31, z 64, z 44, z 71), it being possible for the third movable gear (z 31) to be selected by the first double-acting shifting element (S 1), and it being possible for two of the said movable gears, the fourth and fifth movable gear (z 64, z 44), to be selected by the second double-acting shifting element (S 2), and it not being possible for one of these movable gears, the sixth movable gear (z 71), to be selected.

10. Double clutch transmission according to Claim 9, **characterized in that**, in a first gear plane, a seventh fixed gear (z 11) of the second transmission input shaft (w 2) meshes with the fourth fixed gear (z 12) of the second countershaft (w 3), **in that**, in a second gear plane, an eighth fixed gear (z 21) of the first transmission input shaft (w 1) meshes with the first fixed gear (z 22) of the first countershaft (w 6), **in that**, in a third gear plane, the third movable gear (z 31) of the main shaft (w 4) meshes with the second fixed gear (z 32) of the first countershaft (w 6), **in that**, in a fourth gear plane, the fourth movable gear (z 64) of the main shaft (w 4) meshes with an intermediate gear (zr) for rotational speed reversal for the reverse gear transmission ratios, the intermediate gear (zr) also meshing with the third fixed gear (z 63) of the first countershaft (w 6), **in that**, in a fifth gear plane, the fifth fixed gear (z 43) of the second countershaft (w 3) meshes with the fifth movable gear (z 44) of the main shaft (w 4), **in that**, in a sixth gear plane, the sixth fixed gear (z 51) of the main shaft (w 4) meshes with the first movable gear (z 52) of the second countershaft (w 3), and **in that**, in a seventh gear plane, the sixth movable gear (z 71) of the main shaft (w 4) meshes with the second movable gear (z 72) of the second countershaft (w 3), the said second movable gear (z 71) of the main shaft (w 4) being connected via the planetary carrier (PT) of the planetary gear mechanism to the output shaft (w 5).

11. Double clutch transmission according to Claim 10, **characterized in that** a first forward gear (1) can be selected via the second clutch (K 2) and via the third shifting element (S 3) which connects the first movable gear (z 52) to the second countershaft (w 3), and via the fourth shifting element (S 4) which connects the internal gear (HR) of the planetary gear mechanism to the housing, **in that** a second forward gear (2) can be selected via the first clutch (K 1) and via the first shifting element (S 1) which connects the first transmission input shaft (w 1) to the main shaft (w 4), and via the fourth shifting element (S 4) which connects the internal gear (HR) of the planetary gear mechanism to the housing, **in that** a third forward gear (3) can be selected via the second clutch (K 2) and via the second shifting element (S 2) which connects the fifth movable gear (z 44) to the main shaft (w 4), and via the fourth shifting element (S 4) which connects the internal gear (HR) of the planetary gear mechanism to the housing, **in that** a fourth forward gear (4) can be selected via the first clutch (K 1) and via the first shifting element (S 1) which connects the third movable gear (z 31) to the main shaft (w 4), and via the fourth shifting element (S 4) which connects the internal gear (HR) of the planetary gear mechanism to the housing, **in that** a fifth forward gear (5) can be selected via the second clutch (K 2) and via the third shifting element (S 3) which connects the second movable gear (z 72) to the second countershaft (w 3), and via the fourth shifting element (S 4) which is assigned to the internal gear (HR) of the planetary gear mechanism and is provided in a neutral position (N), **in that** a sixth forward gear (6) can be selected as a direct gear via the first clutch (K 1) and via the first shifting element (S 1) which connects the first transmission input shaft (w 1) to the main shaft (w 4), and via the fourth shifting element (S 4) which connects the internal gear (HR) to the planetary carrier (PT) of the planetary gear mechanism, **in that** a seventh forward gear (7) can be selected via the second clutch (K 2) and via the second shifting element (S 2) which connects the fifth movable gear (z 44) to the main shaft (w 4), and via the fourth shifting element (S 4) which connects the internal gear (HR) to the planetary carrier (PT) of the planetary gear mechanism, and **in that** an eighth forward gear (8) can be selected via the first clutch (K 1) and via the first shifting element (S 1) which connects the third movable gear (z 31) to the main shaft (w 4), and via the fourth shifting element (S 4) which connects the internal gear (HR) to the planetary carrier (PT) of the planetary gear mechanism.

12. Double clutch transmission according to either of Claims 10 and 11, **characterized in that** a reverse gear (R 1) can be selected via the first clutch (K 1) and via the second shifting element (S 2) which connects the fourth movable gear (z 64) to the main shaft (w 4), and via the fourth shifting element (S 4) which connects the internal gear (HR) of the planetary gear mechanism to the housing, and **in that** the further reverse gear (R 2) can be selected via the first clutch (K 1) and via the second shifting element (S 2) which connects the fourth movable gear (z 64) to the main shaft (w 4), and via the fourth shifting element (S 4) which connects the internal gear (HR) to the planetary carrier (PT) of the planetary gear mechanism.

13. Double clutch transmission according to one of Claims 10 to 12, **characterized in that** a further forward gear (5G) can be selected as a range group gear via the second clutch (K 2) and via the third shifting element (S 3) which connects the first movable gear (z 52) to the second countershaft (w 3), and via the fourth shifting element (S 4) which connects the internal gear (HR) to the planetary carrier (PT) of the planetary gear mechanism.

14. Double clutch transmission according to one of the preceding claims, **characterized in that** the main shaft (w 4) is arranged coaxially with respect to the drive shaft (w 0) and with respect to the output shaft (w 5).

15. Double clutch transmission according to one of the preceding claims, **characterized in that** the first countershaft (w 6) which is assigned to the first transmission input shaft (w 1) is configured as a hollow shaft, and the second countershaft (w 3) which is assigned to the second transmission input shaft (w 2) is configured as a solid shaft.

16. Double clutch transmission according to one of the preceding claims, **characterized in that** at least one electric machine (EM) is coupled directly or indirectly to the main shaft (w 4).

17. Double clutch transmission according to one of the preceding claims, **characterized in that** at least one electric machine (EM) is coupled directly or indirectly to the second transmission input shaft (w 2).

18. Double clutch transmission according to one of the preceding claims, **characterized in that** at least nine forward gears (1, 2, 3, 4, 5, 5G, 6, 7, 8) and at least two reverse gears (R1, R2) can be selected, it being possible for at least one of the forward gears (6, 8) to be implemented as a direct gear.

## Revendications

1. Transmission à double embrayage avec deux embrayages (K1, K2), dont les côtés d'entrée sont reliés à un arbre primaire (w0) et dont les côtés de sortie sont reliés respectivement à un de deux arbres d'entrée de transmission disposés coaxialement l'un à l'autre, un premier arbre d'entrée de transmission et un deuxième arbre d'entrée de transmission (w1, w2), de transmissions partielles, et avec deux arbres intermédiaires (w3, w6) disposés coaxialement l'un à l'autre, dans laquelle plusieurs étages de démultiplication commutables sont associés à chaque transmission partielle, une première et une deuxième transmission partielle, ces étages pouvant être couplés à un arbre de sortie (w5) respectivement par l'arbre intermédiaire associé (w3, w6) et par un arbre secondaire (w4) relié à un organe d'entrée d'un engrenage planétaire réalisé sous forme de groupe de zone, dans laquelle l'arbre de sortie (w5) est disposé coaxialement à l'arbre primaire (w0), et un étage de démultiplication commutable indépendamment du groupe de zone peut être couplé à l'arbre de sortie (w5) indépendamment du groupe de zone, dans laquelle il est prévu pour la commutation séquentielle commutable sous charge des huit premiers rapports de marche avant quatre éléments de commutation à double action (S1, S2, S3, S4), dans laquelle une première et une deuxième roues fixes (z22, z32) sont associées à l'arbre intermédiaire (w6) relié au premier arbre d'entrée de transmission (w1), et dans laquelle une extrémité d'entrée de l'arbre secondaire (w4) peut être reliée au premier arbre d'entrée de transmission (w1) par le premier élément de commutation à double action (S1) et une extrémité de sortie de l'arbre secondaire (w4) est reliée à une roue solaire (SR) d'un engrenage planétaire réalisé sous forme de groupe de zone, **caractérisée en ce qu'**une troisième roue fixe (z12) et une première, une deuxième, une troisième et une quatrième roues libres (z42, z52, z62, z72) sont associées à l'arbre intermédiaire (w3) relié au deuxième arbre d'entrée de transmission (w2), dans laquelle la première et la deuxième de ces roues libres (z42, z52) peuvent être commutées par un deuxième élément de commutation à double action (S2) et la troisième et la quatrième de ces roues libres (z62, z72) peuvent être commutées par un troisième élément de commutation à double action (S3), et **en ce qu'**une quatrième, une cinquième et une sixième roues fixes (z41, z51, z61) et une cinquième et une sixième roues libres (z31, z71) sont associées à l'arbre secondaire (w4), dans laquelle la cinquième roue libre (z31) peut être commutée par un premier élément de commutation à double action (S1) et la sixième roue libre (z71) ne peut pas être commutée.

2. Transmission à double embrayage selon la revendication 1, **caractérisée en ce que** l'étage de démultiplication de la première transmission partielle, commutable indépendamment du groupe de zone, est relié directement à l'arbre de sortie (w5) par un porte-satellites (PT) de l'engrenage planétaire, dans laquelle un quatrième élément de commutation (S4) associé à une couronne à denture intérieure (HR) est commuté en position neutre (N).

3. Transmission à double embrayage selon la revendication 2, **caractérisée en ce que** d'autres étages de démultiplication sont couplés à la roue solaire (SR) de l'engrenage planétaire par au moins un des arbres intermédiaires (w3, w6) et par l'arbre secondaire (w4), dans laquelle il se produit une démultiplication de zone en accélération (H) ou en ralentissement (L) selon la position de commutation du quatrième élément de commutation (S4) associé à la couronne à denture intérieure (HR).

4. Transmission à double embrayage selon l'une quelconque des revendications précédentes, **caractérisée en ce qu'**une septième et une huitième roues fixes (z11, z21) sont respectivement associées en tant que constantes d'entraînement aux deux arbres d'entrée de transmission (w1, w2) des transmissions partielles, lesquelles sont respectivement en prise avec une roue fixe associée, la troisième et la première roues fixes (z12, z22) des arbres intermédiaires (w3, w6), dans laquelle il est prévu au total sept plans de roues, un premier, un deuxième, un troisième, un quatrième, un cinquième, un sixième et un septième plans de roues, comme étages de roues droites.

5. Transmission à double embrayage selon la revendication 4, **caractérisée en ce que** dans le premier plan de roues la septième roue fixe (z11) du deuxième arbre d'entrée de transmission (w2) engrène avec la troisième roue fixe (z12) du deuxième arbre intermédiaire (w3), **en ce que** dans le deuxième plan de roues la huitième roue fixe (z21) du premier arbre d'entrée de transmission (w1) engrène avec la première roue fixe (z22) du premier arbre intermédiaire (w6), **en ce que** dans le troisième plan de roues la cinquième roue libre (z31) de l'arbre secondaire (w4) engrène avec la deuxième roue fixe (z32) du premier arbre intermédiaire (w6), **en ce que** dans le quatrième plan de roues la quatrième roue fixe (z41) de l'arbre secondaire (w4) engrène avec la première roue libre (z42) du deuxième arbre intermédiaire (w3), **en ce que** dans le cinquième plan de roues la cinquième roue fixe (z51) de l'arbre secondaire (w4) engrène avec la deuxième roue libre (z52) du deuxième arbre intermédiaire (w3), **en ce que** dans le sixième plan de roues la sixième roue fixe (z61) de l'arbre secondaire (w4) engrène avec une roue intermédiaire (zr) pour l'inversion de la vitesse de rotation pour une démultiplication de marche arrière, dans laquelle la roue intermédiaire (zr) engrène avec la troisième roue libre (z62) du deuxième arbre intermédiaire (w3), et **en ce que** dans le septième plan de roues la sixième roue libre (z71) de l'arbre secondaire (w4) engrène avec la quatrième roue libre (z72) du deuxième arbre intermédiaire (w3), dans laquelle cette sixième roue libre (z71) de l'arbre secondaire (w4) est reliée à l'arbre de sortie (w5) par le porte-satellites (PT) de l'engrenage planétaire.

6. Transmission à double embrayage selon l'une quelconque des revendications 2, 3, 4 ou 5, **caractérisée en ce qu'**un premier rapport de marche avant (1) peut être engagé par le deuxième embrayage (K2) et par le deuxième élément de commutation (S2) reliant la deuxième roue libre (z52) du deuxième arbre intermédiaire (w3) au deuxième arbre intermédiaire (w3) ainsi que par le quatrième élément de commutation (S4) reliant la couronne à denture intérieure (HR) de l'engrenage planétaire au carter, **en ce qu'**un deuxième rapport de marche avant (2) peut être engagé par le premier embrayage (K1) et par le premier élément de commutation (S1) reliant le premier arbre d'entrée de transmission (w1) à l'arbre secondaire (w4) ainsi que par le quatrième élément de commutation (S4) reliant la couronne à denture intérieure (HR) de l'engrenage planétaire à un carter, **en ce qu'**un troisième rapport de marche avant (3) peut être engagé par le deuxième embrayage (K2) et par le deuxième élément de commutation (S2) reliant la première roue libre (z42) du deuxième arbre intermédiaire (w3) au deuxième arbre intermédiaire (w3) ainsi que par le quatrième élément de commutation (S4) reliant la couronne à denture intérieure (HR) de l'engrenage planétaire au carter, **en ce qu'**un quatrième rapport de marche avant (4) peut être engagé par le premier embrayage (K1) et par le premier élément de commutation (S1) reliant la cinquième roue libre (z31) à l'arbre secondaire (w4) ainsi que par le quatrième élément de commutation (S4) reliant la couronne à denture intérieure (HR) de l'engrenage planétaire au carter, **en ce qu'**un cinquième rapport de marche avant (5) peut être engagé par le deuxième embrayage (K2) et par le troisième élément de commutation (S3) reliant la quatrième roue libre (z72) du deuxième arbre intermédiaire (w3) au deuxième arbre intermédiaire (w3) ainsi que par le quatrième élément de commutation (S4) associé à la couronne à denture intérieure (HR) de l'engrenage planétaire et prévu dans une position neutre (N), **en ce qu'**un sixième rapport de marche avant (6) peut être engagé en prise directe par le premier embrayage (K1) et par le premier élément de commutation (S1) reliant le premier arbre d'entrée de transmission (w1) à l'arbre secondaire (w4) ainsi que par le quatrième élément de commutation (S4) reliant la couronne à denture intérieure (HR) au porte-satellites (PT) de l'engrenage planétaire, **en ce qu'**un septième rapport de marche avant (7) peut être engagé par le deuxième embrayage (K2) et par le deuxième élément de commutation (S2) reliant la première roue libre (z42) du deuxième arbre intermédiaire (w3) au deuxième arbre intermédiaire (w3) ainsi que par le quatrième élément de commutation (S4) reliant la couronne à denture intérieure (HR) au porte-satellites (PT) de l'engrenage planétaire, et **en ce qu'**un huitième rapport de marche avant (8) peut être engagé par le premier embrayage (K1) et par le premier élément de commutation (S1) reliant la cinquième roue libre (z31) de l'arbre secondaire (w4) à l'arbre secondaire (w4) ainsi que par le quatrième élément de commutation (S4) reliant la couronne à denture intérieure (HR) au porte-satellites (PT) de l'engrenage planétaire.

7. Transmission à double embrayage selon l'une quelconque des revendications 2, 3, 4, 5 ou 6, **caractérisée en ce qu'**un rapport de marche arrière (R1) peut être engagé par le deuxième embrayage (K2) et par le troisième élément de commutation (S3) reliant la troisième roue libre (z62) du deuxième arbre intermédiaire (w3) au deuxième arbre intermédiaire (w3) ainsi que par le quatrième élément de commutation (S4) reliant la couronne à denture intérieure (HR) de l'engrenage planétaire au carter, et **en ce qu'**un autre rapport de marche arrière (R2) peut être engagé par le deuxième embrayage (K2) et par le troisième élément de commutation (S3) reliant la troisième roue libre (z62) du deuxième arbre intermédiaire (w3) au deuxième arbre intermédiaire (w3) ainsi que par le quatrième élément de commutation (S4) reliant la couronne à denture intérieure (HR) au porte-satellites (PT) de l'engrenage planétaire.

8. Transmission à double embrayage selon l'une quelconque des revendications 2, 3, 4, 5, 6 ou 7, **caractérisée en ce qu'**un autre rapport de marche avant (5G) peut être engagé comme rapport de groupe de zone par le deuxième embrayage (K2) et par le deuxième élément de commutation (S2) reliant la deuxième roue libre (z52) du deuxième arbre intermédiaire (w3) au deuxième arbre intermédiaire (w3) ainsi que par le quatrième élément de commutation (S4) reliant la couronne à denture intérieure (HR) au porte-satellites (PT) de l'engrenage planétaire.

9. Transmission à double embrayage avec deux embrayages (K1, K2), dont les côtés d'entrée sont reliés à un arbre primaire (w0) et dont les côtés de sortie sont reliés respectivement à un de deux arbres d'entrée de transmission disposés coaxialement l'un à l'autre, un premier arbre d'entrée de transmission et un deuxième arbre d'entrée de transmission (w1, w2), de transmissions partielles, et avec deux arbres intermédiaires (w3, w6) disposés coaxialement l'un à l'autre, dans laquelle plusieurs étages de démultiplication commutables sont associés à chaque transmission partielle, une première et une deuxième transmission partielle, ces étages pouvant être couplés à un arbre de sortie (w5) respectivement par l'arbre intermédiaire associé (w3, w6) et par un arbre secondaire (w4) relié à un organe d'entrée d'un engrenage planétaire réalisé sous forme de groupe de zone, dans laquelle l'arbre de sortie (w5) est disposé coaxialement à l'arbre primaire (w0), et un étage de démultiplication commutable indépendamment du groupe de zone peut être couplé à l'arbre de sortie (w5) indépendamment du groupe de zone, dans laquelle il est prévu pour la commutation séquentielle commutable sous charge des huit premiers rapports de marche avant quatre éléments de commutation à double action (S1, S2, S3, S4), et dans laquelle une extrémité d'entrée de l'arbre secondaire (w4) peut être reliée au premier arbre d'entrée de transmission (w1) par le premier élément de commutation à double action (S1) et une extrémité de sortie de l'arbre secondaire (w4) est reliée à une roue solaire (SR) de l'engrenage planétaire réalisé sous forme de groupe de zone, **caractérisée en ce qu'**une première, une deuxième et une troisième roues fixes (z22, z32, z63) sont associées à l'arbre intermédiaire (w6) relié au premier arbre d'entrée de transmission (w1), **en ce qu'**une quatrième et une cinquième roues fixes (z12, z43) et deux roues libres, une première et une deuxième roues libres (z52, z72), sont associées à l'arbre intermédiaire (w3) relié au deuxième arbre d'entrée de transmission (w2), dans laquelle les deux roues libres (z52, z72) peuvent être commutées par le troisième élément de commutation à double action (S3), et **en ce qu'**une sixième roue fixe (z51) et quatre roues libres, une troisième, une quatrième, une cinquième et une sixième roues libres (z31, z64, z44, z71), sont associées à l'arbre secondaire (w4), dans laquelle la troisième roue libre (z31) peut être commutée par le premier élément de commutation à double action (S1) et deux de ces roues libres, la quatrième et la cinquième roues libres (z64, z44), peuvent être commutées par le deuxième élément de commutation à double action (S2), et une de ces roues libres, la sixième roue libre (z71), ne peut pas être commutée.

10. Transmission à double embrayage selon la revendication 9, **caractérisée en ce que** dans un premier plan de roues une septième roue fixe (z11) du deuxième arbre d'entrée de transmission (w2) engrène avec la quatrième roue fixe (z12) du deuxième arbre intermédiaire (w3), **en ce que** dans un deuxième plan de roues une huitième roue fixe (z21) du premier arbre d'entrée de transmission (w1) engrène avec la première roue fixe (z22) du premier arbre intermédiaire (w6), **en ce que** dans un troisième plan de roues la troisième roue libre (z31) de l'arbre secondaire (w4) engrène avec la deuxième roue fixe (z32) du premier arbre intermédiaire (w6), **en ce que** dans un quatrième plan de roues la quatrième roue libre (z64) de l'arbre secondaire (w4) engrène avec une roue intermédiaire (zr) pour l'inversion de la vitesse de rotation pour des démultiplications de marche arrière, dans laquelle la roue intermédiaire (zr) engrène également avec la troisième roue fixe (z63) du premier arbre intermédiaire (w6), **en ce que** dans un cinquième plan de roues la cinquième roue fixe (z43) du deuxième arbre intermédiaire (w3) engrène avec la cinquième roue libre (z44) de l'arbre secondaire (w4), **en ce que** dans un sixième plan de roues la sixième roue fixe (z51) de l'arbre secondaire (w4) engrène avec la première roue libre (z52) du deuxième arbre intermédiaire (w3), et **en ce que** dans un septième plan de roues la sixième roue libre (z71) de l'arbre secondaire (w4) engrène avec la deuxième roue libre (z72) du deuxième arbre intermédiaire (w3), dans laquelle cette deuxième roue libre (z71) de l'arbre secondaire (w4) est reliée à l'arbre de sortie (w5) par le porte-satellites (PT) de l'engrenage planétaire.

11. Transmission à double embrayage selon la revendication 10, **caractérisée en ce qu'**un premier rapport de marche avant (1) peut être engagé par le deuxième embrayage (K2) et par le troisième élément de commutation (S3) reliant la première roue libre (z52) au deuxième arbre intermédiaire (w3) ainsi que par le quatrième élément de commutation (S4) reliant la couronne à denture intérieure (HR) de l'engrenage planétaire au carter, **en ce qu'**un deuxième rapport de marche avant (2) peut être engagé par le premier embrayage (K1) et par le premier élément de commutation (S1) reliant le premier arbre d'entrée de transmission (w1) à l'arbre secondaire (w4) ainsi que par le quatrième élément de commutation (S4) reliant la couronne à denture intérieure (HR) de l'engrenage planétaire au carter, **en ce qu'**un troisième rapport de marche avant (3) peut être engagé par le deuxième embrayage (K2) et par le deuxième élément de commutation (S2) reliant la cinquième roue libre (z44) à l'arbre secondaire (w4) ainsi que par le quatrième élément de commutation (S4) reliant la couronne à denture intérieure (HR) de l'entraînement planétaire au carter, **en ce qu'**un quatrième rapport de marche avant (4) peut être engagé par le premier embrayage (K1) et par le premier élément de commutation (S1) reliant la troisième roue libre (z31) à l'arbre secondaire (w4) ainsi que par le quatrième élément de commutation (S4) reliant la couronne à denture intérieure (HR) de l'engrenage planétaire au carter, **en ce qu'**un cinquième rapport de marche avant (5) peut être engagé par le deuxième embrayage (K2) et par le troisième élément de commutation (S3) reliant la deuxième roue libre (z72) au deuxième arbre intermédiaire (w3) ainsi que par le quatrième élément de commutation (S4) associé à la couronne à denture intérieure (HR) de l'engrenage planétaire et prévu dans une position neutre (N), **en ce qu'**un sixième rapport de marche avant (6) peut être engagé en prise directe par le premier embrayage (K1) et par le premier élément de commutation (S1) reliant le premier arbre d'entrée de transmission (w1) à l'arbre secondaire (w4) ainsi que par le quatrième élément de commutation (S4) reliant la couronne à denture intérieure (HR) au porte-satellites (PT) de l'engrenage planétaire, **en ce qu'**un septième rapport de marche avant (7) peut être engagé par le deuxième embrayage (K2) et par le deuxième élément de commutation (S2) reliant la cinquième roue libre (z44) à l'arbre secondaire (w4) ainsi que par le quatrième élément de commutation (S4) reliant la couronne à denture intérieure (HR) au porte-satellites (PT) de l'engrenage planétaire, et **en ce qu'**un huitième rapport de marche avant (8) peut être engagé par le premier embrayage (K1) et par le premier élément de commutation (S1) reliant la troisième roue libre (z31) à l'arbre secondaire (w4) ainsi que par le quatrième élément de commutation (S4) reliant la couronne à denture intérieure (HR) au porte-satellites (PT) de l'engrenage planétaire.

12. Transmission à double embrayage selon une des revendications 10 ou 11, **caractérisée en ce qu'**un rapport de marche arrière (R1) peut être engagé par le premier embrayage (K1) et par le deuxième élément de commutation (S2) reliant la quatrième roue libre (z64) à l'arbre secondaire (w4) ainsi que par le quatrième élément de commutation (S4) reliant la couronne à denture intérieure (HR) de l'engrenage planétaire au carter, et **en ce que** l'autre rapport de marche arrière (R2) peut être engagé par le premier embrayage (K1) et par le deuxième élément de commutation (S2) reliant la quatrième roue libre (z64) à l'arbre secondaire (w4) ainsi que par le quatrième élément de commutation (S4) reliant la couronne à denture intérieure (HR) au porte-satellites (PT) de l'engrenage planétaire.

13. Transmission à double embrayage selon une des revendications 10 à 12, **caractérisée en ce qu'**un autre rapport de marche avant (5G) peut être engagé comme rapport de groupe de zone par le deuxième embrayage (K2) et par le troisième élément de commutation (S3) reliant la première roue libre (z52) au deuxième arbre intermédiaire (w3) ainsi que par le quatrième élément de commutation (S4) reliant la couronne à denture intérieure (HR) au porte-satellites (PT) de l'engrenage planétaire.

14. Transmission à double embrayage selon l'une quelconque des revendications précédentes, **caractérisée en ce que** l'arbre secondaire (w4) est disposé coaxialement à l'arbre primaire (w0) et à l'arbre de sortie (w5).

15. Transmission à double embrayage selon l'une quelconque des revendications précédentes, **caractérisée en ce que** le premier arbre intermédiaire (w6) associé au premier arbre d'entrée de transmission (w1) est réalisé sous forme d'arbre creux et le deuxième arbre intermédiaire (w3) associé au deuxième arbre d'entrée de transmission (w2) est réalisé sous forme d'arbre plein.

16. Transmission à double embrayage selon l'une quelconque des revendications précédentes, **caractérisée en ce qu'**au moins une machine électrique (EM) est couplée directement ou indirectement à l'arbre secondaire (w4).

17. Transmission à double embrayage selon l'une quelconque des revendications précédentes, **caractérisée en ce qu'**au moins une machine électrique (EM) est couplée directement ou indirectement au deuxième arbre d'entrée de transmission (w2).

18. Transmission à double embrayage selon l'une quelconque des revendications précédentes, **caractérisée en ce qu'**au moins neuf rapports de marche avant (1, 2, 3, 4, 5, 5G, 6, 7, 8) et au moins deux rapports de marche arrière (R1, R2) peuvent être engagés, dans laquelle au moins un des rapports de marche avant (6, 8) peut être réalisé en prise directe.
